(19) Europäisches Patentamt
European Patent Office
Office européen des brevets

(11) Publication number : 0 329 254 B1

(12) # EUROPEAN PATENT SPECIFICATION

(45) Date of publication of patent specification : **24.06.92 Bulletin 92/26**

(21) Application number : **89200374.0**

(22) Date of filing : **15.02.89**

(51) Int. Cl.$^5$ : **C10M 143/12,** C08F 8/32, C08F 297/00, C10L 1/22, // C10N30:02, C10N30:04, C10N40:00, C10N60:00, C10N60:02

(54) **Lubricant composition containing a viscosity index improver having dispersant properties.**

(30) Priority : **17.02.88 US 157355**
**17.02.88 US 157348**

(43) Date of publication of application : **23.08.89 Bulletin 89/34**

(45) Publication of the grant of the patent : **24.06.92 Bulletin 92/26**

(84) Designated Contracting States : **AT BE CH DE ES FR GB GR IT LI LU NL SE**

(56) References cited :
**EP-A- 0 215 501**
**US-A- 4 145 298**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Willis, Carl Lesley**
**15922 Red Willow**
**Houston Texas 77084 (US)**
Inventor : **Martinez Arismendi, Andres, Jr.**
**9707 Ravensworth**
**Houston Texas 77031 (US)**

EP 0 329 254 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to lubricant compositions and additive concentrates containing selectively hydrogenated functionalized block copolymers and to a process for preparing the lubricant compositions. The block copolymers are expected to find utility as viscosity index improvers and dispersants for lubricants, fuels and the like. The polymer is obtained by modifying a block copolymer composed of a selectively hydrogenated conjugated diene compound and an alkenyl arene compound with an amide or primary or secondary amine containing functional group grafted primarily in the alkenyl arene block.

It is known that a block copolymer can be obtained by an anionic copolymerization of a conjugated diene compound and an alkenyl arene compound by using an organic alkali metal initiator. Block copolymers have been produced which comprise primarily those having a general structure

A--B and A--B--A

wherein the polymer blocks A comprise thermoplastic polymer blocks of alkenyl arenes such as polystyrene, while block B is a polymer block of a selectively hydrogenated conjugated diene. The proportion of the thermoplastic blocks to the elastomeric polymer block and the relative molecular weights of each of these blocks is balanced to obtain a rubber having unique performance characteristics. When the content of the alkenyl arene is small, the produced block copolymer is a so-called thermoplastic rubber. In such a rubber, the blocks A are thermodynamically incompatible with the blocks B resulting in a rubber consisting of two phases; a continuous elastomeric phase (blocks B) and a basically discontinuous hard, glass-like plastic phase (blocks A) called domains. Since the A-B-A block copolymers have two A blocks separated by a B block, domain formation results in effectively locking the B blocks and their inherent entanglements in place by the A blocks and forming a network structure.

These domains act as physical crosslinks anchoring the ends of many block copolymer chains. Such a phenomena allows the A-B-A rubber to behave like a conventionally vulcanized rubber in the unvulcanized state and is applicable for various uses. For example, these network forming polymers are applicable for uses such as moldings of shoe sole, etc.; impact modifier for polystyrene resins and engineering thermoplastics; in adhesive and binder formulations; modification of asphalt; etc.

Conversely, as the A-B block copolymers have only one A block, domain formation of the A blocks does not lock in the B blocks and their inherent entanglements. Moreover, when the alkenyl arene content is small resulting in a continuous elastomeric B phase. The strength of such polymers is derived primarily from the inherent entanglements of the various B blocks therein and to a lesser extent the inherent entanglements of the A blocks therein. However, the non-network forming polymers have found particular utility as viscosity index improvers (U.S. Patents 3,700,748; 3,763,044; 3,772,196; 3,965,019; and 4,036,910). Non-network forming polymers are also utilized in adhesive and binder formulations and as modifiers or plasticizers for polystyrene resins and engineering thermoplastics (U.S. Patent 4,584,338).

Network forming copolymers with a high alkenyl arene compound content, such as more than 70% by weight, provide a resin possessing both excellent impact resistance and transparency, and such a resin is widely used in the field of packaging. Many proposals have been made on processes for the preparation of these types of block copolymers (U.S. 3,639,517).

Both the network forming (A-B-A) and non-network forming (A-B) polymers are physically crosslinked, these polymers may be handled in thermoplastic forming equipment and are soluble in a variety of relatively low cost solvents.

While in general these block copolymers have a number of outstanding technical advantages, one of their principal limitations lies in their sensitivity to oxidation. This behavior is due to the unsaturation present in the elastomeric section comprising the polymeric diene block. Oxidation may be minimized by selectively hydrogenating the copolymer in the diene block, for example, as disclosed in U.S. Patent Re 27,145 and the above referenced VI improver patents. For example, prior to hydrogenation, the block copolymers have an A-B or an A-B-A molecular structure wherein each of the A's is an alkenyl-arene polymer block and B is a conjugated diene polymer block, such as an isoprene polymer block or a butadiene polymer block preferably containing 35-55 mole percent of the condensed butadiene units in a 1,2 configuration.

Non-network forming (A-B) block copolymers are especially deficient in applications in which good mechanical integrity and deformation resistance are required. This behavior is a consequence of the lack of inherent entanglements of the various B rubber blocks and to a lesser extent the entanglements of the A blocks therein which controls strength under tensile deformation. Additionally, these non-network forming copolymers, in particular A-B copolymers, are also deficient in viscosity index (VI) improver applications wherein thickening efficiency is lost at higher temperatures. As such, improvement in such properties may be achieved by enhancing the integrity of the alkenyl arene domains and the elastomeric matrix through the incorporation of interacting functional groups along the polymer chain.

Conversely, network forming copolymers are known to have particularly high tensile strengths at room temperature due to the formation of glassy phase arene block domains which act as physical crosslinks locking in the inherent entanglements within the rubbery B block matrix. The mechanical integrity of these domains and the resulting network structure formed appear to control the tensile strengths of these copolymers. Moreover, at elevated temperatures, the mechanical integrity of block copolymers is limited to the integrity of the hard phase arene block domains. For example, network forming copolymers having arene blocks of polystyrene have poor mechanical properties at high temperature which may be attributed to the weakening of the polystyrene domains above its glass transition temperature (Tg) of 100°C. Improvements in the high temperature characteristics of the network forming block copolymers may be achieved by enhancing the integrity of the alkenyl arene domains to higher temperatures.

These selectively hydrogenated block copolymers are further deficient in many applications in which interactions are required between it and other materials. Applications in which improvements in adhesion characteristics may promote improved performance include 1) the toughening of, and dispersion in, polar polymers such as the engineering thermoplastics; 2) the adhesion to high energy substrates in a hydrogenated block copolymer elastomer based high temperature adhesive, sealant or coating materials; and 3) the use of hydrogenated elastomers in reinforced polymer systems. The placement of functional groups onto the block copolymer may provide interactions not possible with hydrocarbon polymers and, hence, may extend the range of applicability of this material.

Many attempts have been made to improve the impact properties of polyamides by adding low modulus modifiers which contain polar moieties as a result of polymerization or which have been modified to contain polar moieties by various grafting techniques. To this end, various compositions have been proposed utilizing such modifiers having nitrogen containing functional groups thereon, for example, Epstein in U.S. Patent 4,174,358; Hergenrother et al. in U.S. Patent 4,427,828; and Beever et al. in U.S. Patent 4,588,756.

Epstein discloses a broad range of low modulus polyamide modifiers which have been prepared by free radical copolymerization of specific monomers with acid containing monomers. Alternatively, Epstein discloses the modification of polymers by grafting thereto specific carboxylic acid containing monomers. The grafting techniques allowed for therein are limited to thermal addition (ene reaction) and to nitrene insertion into C-H bonds or addition to C=C bonds (ethylenic unsaturation). Via these grafting techniques, Epstein may produce modifiers with nitrogen-containing functional groups. With nitrene insertion, the aromatic sulfonyl azides utilized therein are used as a means for grafting a carboxylic acid group onto the modifier. As such, the interaction between the polyamide and the modifier is achieved via the carboxylic acid group of these nitrogen containing functional groups. On the otherhand, when a dicarboxylic acid or derivative thereof (e.g., an anhydride) group is grafted thereon say via thermal addition, the dicarboxylic acid group may either directly interact with the polyamide via a grafting reaction or indirectly interact with the polyamide by first further modifying the dicarboxylic acid group by reacting same with a caprolactam to form a cyclic imide with a pendant polyamide oligomer chain which in turn acts as a compatibilizer with the polyamide or possible transamidation graft site.

Though Epstein does disclose a broad range of polyamide modifiers, Epstein does not disclose or suggest the utilization of hydrogenated copolymers of alkenyl arenes and conjugated dienes nor, more particularly, modified selectively hydrogenated copolymers of alkenyl arenes and conjugated dienes as polyamide modifiers. Furthermore, Epstein relies upon the carboxylic acid portion, as opposed to the nitrogen portion, of the functional groups in the modifiers therein as the active participant in the impact modification of the polyamide.

Hergenrother et al. disclose polyamide compositions which contain a modified partially hydrogenated aromatic vinyl compound/conjugated diene block copolymer as a polyamide modifier. In order to improve the weatherability and resistance to heat aging, Hergenrother et al. partially hydrogenate the block copolymer in their respective blends to an ethylenic unsaturation degree not exceeding 20 percent of the ethylenic unsaturation contained in the block copolymer prior to hydrogenation. Once the block copolymer is partially hydrogenated, the block copolymer is modified by grafting a dicarboxylic acid group or derivative thereof (e.g. anhydride moieties). Hergenrother et al. disclose grafting via thermal addition (ene reaction) utilizing the available residual unsaturation in the block copolymer. As such, Hergenrother et al. retained the deficiencies associated with the reversibility of the ene reaction. The anhydride moieties therein, like in Epstein, are believed to undergo a grafting reaction with the terminal amines of the polyamide to form a cyclic imide, thereby converting the functional group into a nitrogen-containing functional group. However, it is readily apparent that Hergenrother et al. place heavy reliance on these anhydride moieties, as opposed to a nitrogen-containing functional group, to effect the impact modification of the polyamide.

As is readily apparent from the foregoing prior art polyamide compositions utilizing alkenyl arene/conjugated diene block copolymers as polyamide modifiers, improved impact modification of the particular polyamide is achieved via specific interactions, between the modified diene block and the polyamide. Thus, to the extent that impact modification and strength mechanisms rely on the elastomeric properties of the

diene block of the copolymer, these properties have been adversely affected by modifying the diene block in this manner.

Beever discloses a polyamide composition containing an oil-soluble organonitrogen compound grafted hydrogenated conjugated diene/monovinylarene copolymer, such as those described in U.S. Patent No. 4,145,298 to Trepka. The copolymer is characterized as having been prepared by the process which comprises 1) metalating a hydrogenated conjugated diene hydrocarbon/mono vinylarene hydrocarbon copolymer and 2) reacting the resulting metalated hydrogenated copolymer with effective amounts of at least one nitrogen-containing organic compound, thereby preparing the grafted copolymer. The suitable nitrogen containing organic compound are specifically described by the general formula:

$$X\text{-}Q\text{-}(NR_2^3)n \text{ or } Y[Q\text{-}(NR_2^3)_n]_m$$

wherein each $R_2^3$ iss the same or different alkyl, cycloalkyl, aryl, or combination thereof, Q is a hydrocarbon radical having a valence of n+l and is a saturated aliphatic, saturated cycloaliphatic, or aromatic radical, or combination thereof, X is a functional group capable of reacting on a one-to-one basis with one equivalent of polymer lithium, Y is or contains a functional group capable of reacting on a one-to-one basis with one equivalent of polymer lithium, n is at least one, and m is 2 or 3. X includes:

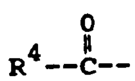 ; 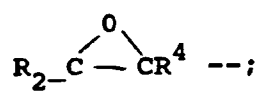

wherein R- is hydrogen, or an alkyl, cycloalkyl, or aryl radical or combination radical; N≡C-; and $R^3N{\equiv}CH$--. Thus, it is readily apparent that suitable nitrogen-containing organic compounds therein are electrophilic graftable molecules requiring three portions: 1) X, a lithium reactive functional group; 2) $NR_2^3$ , the nitrogen containing portion of the molecule (a tertiary amine); and 3) Q, which couple together X and $NR_2\eta$. This method of using an electrophilic graftable molecule having an appended amine site as a route to attach amine groups to the block copolymer suffers from the disadvantage that the product of the reaction of X with the lithiated polymer is itself a functional site (a ketone or alcohol for example). The introduction of this second (reactive) site of functionality (with the amine being the other site of functionality) may lead to undesirable effects particularly in the process of incorporating the required amine functionality.

With respect to viscosity index improvers, many attempts have been made to improve the viscosity index of lubricants and the like by adding modifiers which contain polar moieties as a result of various grafting techniques. The incorporation of nitrogen-containing functional groups onto the modifiers imparts thereto dispersant characteristics in lubricants, fuels and the like. To this end, various viscosity index improver/dispersant modifiers have been proposed having nitrogen-containing functional groups thereon, for example, Kiovsky in G.B. Patent No. 1,548,464, Hayashi et al in U.S. Patent No. 4,670,173, and Trepka in U.S. Patent Nos. 4,145,298 and 4,328,202.

Both Kiovsky and Hayashi et al. disclose a partially or selectively hydrogenated aromatic vinyl compound/conjugated diene block copolymer to which has been grafted a carboxylic acid group (or anhydride thereof) onto the diene portion of the polymer. The graft is effected via a free radically initiated reaction. Once modified with carboxyl functional groups, the modified polymer is further modified by reacting these carboxyl or functional groups with an amine containing material, e.g. a mono- or polyamine. The so modified polymer contains a nitrogen-containing functional group to impart dispersing characteristics thereto.

Trepka discloses an oil-soluble organonitrogen compound grafted hydrogenated conjugated diene/monovinylarene copolymer. This same polymer is utilized to impact modify polyamides by Beever et al. in U.S. Patent 4,588,756, previously discussed herein. The disadvantages of utilizing such a polymer for impact modifying polyamides are equally applicable with respect to viscosity index improver and dispersant applications. Of particular importance is the disadvantage related to the introduction of a second (reactive) site of functionality (a ketone or alcohol for example) with the amine being the other site of functionality. This second functional site is particularly susceptible to oxidative attack and cleavage of the amine functional group from the polymer, particularly under the severe conditions encountered in an internal combustion engine. Such an occurrence would be expected to significantly reduce the dispersant activity of the polymer.

On the otherhand, the present invention relates to a thermally stable, modified, selectively hydrogenated conjugated diene/alkenyl arene copolymer grafted with at least one functional group utilizing the metalation process. Herein, the functional groups are amide or amine functional groups which are grafted primarily in the alkenyl arene portions of the copolymer. The introduction of a second site of functionality is avoided by utilizing electrophiles, as opposed to electrophilic graftable molecules such as in Beever. The electrophiles are isocyanates or imines which, upon reacting with the lithiated polymer and contacting with a proton source, become, respectively, amide functional groups or amine functional groups. An amide functional group may, alternatively, be produced by reacting the lithiated polymer with the electrophile carbon dioxide and heating the resulting carboxylic acid functionalised block copolymer with a primary or secondary amine. In this composition, interactions between a condensation polymer and the copolymer are expected to be achieved via the alkenyl arene block.

To those skilled in the art, the degree to which the grafting reaction and phase size reduction occur, thereby promoting interfacial adhesion, together with the distribution of the rubber within the blend typically contribute to impact toughening of the blend. The expected results herein are that functionalizing the alkenyl arene segment will promote covalent bonding between the modified block copolymer and the condensation engineering thermoplastic (ETP), polymers, e.g. a polyamide. Furthermore, the block copolymer is also expected to become well distributed in the polyamide phase.

According to the present invention, there is provided a thermally stable, selectively hydrogenated, block copolymer to which an amide or amine functional group has been grafted primarily in the alkenyl arene block.

More specifically, there is provided a lubricant composition comprising:

a) from 90 to 99.99 percent by weight of a lubricating oil, and

b) from 0.01 to 10 percent by weight of a viscosity improving, oil soluble, functionalized selectively hydrogenated block copolymer to which has been grafted an amide or a primary or secondary amine functional group, the percentages by weight being based on the total weight of the composition, said functionalized block copolymer comprising

1) a base block copolymer which comprises

i) from 2 to 70 weight percent of at least one polymer block A, more than 50 percent by weight of said A block being a polymerized alkenyl arene block, and

ii) at least one selectively hydrogenated polymer block B having a residual ethylenic unsaturation content of not more than 20 percent, more than 50 percent by weight of said B block prior to hydrogenation being a polymerized conjugated diene block; said base block copolymer having a structure selected from the group consisting of A-B, B-A-B, $(B\text{-}A)\text{-}_nX$, and $(B\text{-}A)\text{-}_yX\text{-}(B)_z$ and $(B\text{-}A)\text{-}_yX\text{-}(A)_z$ wherein X is a residual group of a polyfunctional coupling agent having two or more functional groups, y and z are, independently integers of 1 to 20 and n is an integer of 2 to 40; and

2) wherein said amide or amine functional groups are grafted to said base block copolymer on said A blocks, wherein said functionalized block copolymer has been prepared by the process which comprises metalating the base block copolymer, reacting the resulting metalated base block copolymer with an electrophile selected from carbon dioxide, or at least one isocyanate of the general formula $R_4\text{-}N\text{=}C\text{=}O$ or imine of the general formula

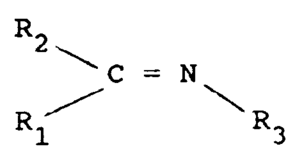 ,

where $R_1$, $R_2$ and $R_4$ are the same or different alkyl, cycloalkyl or aryl radicals or combination radicals and $R_3$ is a hydrogen, alkyl, cycloalkyl, aryl or silyl radical, and when the electrophile is an isocyanate or imine, contacting the resulting product with a proton source, or, when the electrophile is carbon dioxide, reacting the resulting carboxylated base block copolymer with a primary or secondary amine to form a quarternary ammonium salt, and heating the quarternary ammonium salt, to produce the functionalized block copolymer.

In the present invention, a silyl radical has the general formula:

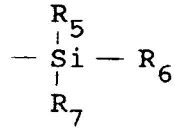

wherein $R_5$, $R_6$ and $R_7$ are the same or different alkyl, cycloalkyl or aryl radicals or a combination thereof, for example, methyl, ethyl, phenyl, etc.

There is no known limit on the number of carbon atoms of any of $R_1$, $R_2$, $R_3$, $R_4$, $R_5$, $R_6$ or $R_7$ as far as operability is concerned. Such radicals without acidic hydrogen atoms thereon are particularly preferred to avoid the possibility of deleterious protonation of the metalated (e.g. lithiated) polymer.

If, when the electrophile is carbon dioxide, any metal carboxylated salts are formed, then the following steps may be included prior to reacting the carboxylated base block copolymer with the primary or secondary amine:

reacidifying the carboxylated base block copolymer to convert the grafted carboxyl groups thereon to the carboxylic acid form thereof, and

washing the resulting acidified carboxylated base block copolymer to a pH of 7, and drying same.

Furthermore, the functionalized block copolymer may be linear or branched, with the term "branched" also including symmetric or asymmetric radial and star structures.

Preferably, there is provided the functionalized selectively hydrogenated block copolymer as defined above, wherein

(a) more than 50 percent by weight of each of the A blocks prior to hydrogenation is a polymerized monoalkenyl monocyclic arene block having an average molecular weight of 1,000 to 125,000, preferably 1,000 to 60,000,

(b) more than 50 percent by weight of each of the B blocks prior to hydrogenation is a polymerized conjugated diene block having an average molecular weight of 10,000 to 450,000, preferably 10,000 to 150,000,

(c) the A blocks constitute between 2 and 70, and more preferably between 20 and 70 percent by weight of the copolymer,

(d) the unsaturation of the B blocks is less than 10 percent, preferably less than 5 percent and more preferably at most 2 percent, of the original unsaturation of the B blocks,

(e) the unsaturation of the A blocks is greater than 50 percent, preferably greater than 90 percent, of the original unsaturation of the A blocks, and

(f) the amide or amine functional group is preferably present on the average from one (1) of said functional groups per molecule of said copolymer to one (1) of said functional groups per aromatic ring of said A block and more preferably on the average from three (3) of said functional groups per molecule of said copolymer to one (1) of said functional groups per aromatic ring of said A block.

For imparting suitable dispersancy to the block copolymers, the effective amount of nitrogen grafted thereto is at least 0.01 percent by weight based on the base block copolymer, more preferably from 0.01 to 5 percent by weight and yet more preferably from 0.05 to 0.5 percent by weight.

An effective amount of the functionalized block copolymer herein for dispersing insoluble impurities and for improving viscosity properties will be from 0.01 to 10 percent by weight based on the total weight of the lubricant, preferably from 0.5 to 5 percent by weight.

Preferably, these block copolymers are diluted with a substantially inert, normally liquid organic diluent to form concentrates. These concentrates contain from 5 percent to 90 percent by weight of the functionalized block copolymer based on the total weight of the concentrate.

The present invention further provides a process for preparing a lubricant composition as defined above which comprises preparing a functionalized selectively hydrogenated block copolymer to which has been grafted an amide or a primary or secondary amine functional group, said functionalized block copolymer comprising:

1) a base block copolymer which comprises

i) from 2 to 70 weight percent of at least one polymer block A, more than 50 percent by weight of said A block being a polymerized alkenyl arene block, and

ii) at least one selectively hydrogenated polymer block B having a residual ethylenic unsaturation content of not more than 20 percent, more than 50 percent by weight of said B block prior to hydrogenation being a polymerized conjugated diene block; said base block copolymer having a structure selected from the group consisting of A-B, B-A-B, $(B\text{-}A)\text{-}_nX$, and $(B\text{-}A)\text{-}_yX\text{-}(B)_z$ and $(B\text{-}A)\text{-}_yX\text{-}(A)_z$ wherein X is a residual group of a polyfunctional coupling agent having two or more functional groups, y and z are, independently integers of 1 to 20 and n is an integer of 2 to 40; and

2) wherein said amide or amine functional groups are grafted to said base block copolymer on said A blocks, which comprises metalating said base block copolymer, reacting the resulting metalated base block copolymer with an electrophile selected from carbon dioxide, or at least one isocyanate of the general formula $R_4\text{-}N{=}C{=}O$ or imine of the general formula

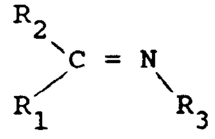

where $R_1$, $R_2$ and $R_4$ are the same or different alkyl, cycloalkyl or aryl radicals or combination radicals and $R_3$ is a hydrogen, alkyl, cycloalkyl, aryl or silyl radical, and, when the electrophile is an isocyanate or imine, contacting the resulting product with a proton source, or, when the electrophile is carbon dioxide, reacting the resulting carboxylated base block copolymer with a primary or secondary amine to form a quaternary ammonium salt and heating the quaternary ammonium salt, to produce the functionalized block copolymer; and mixing from 0.01 to 10 percent by weight of the functionalized block copolymer with from 90 to 99.99 percent by weight of a lubricating oil, the percentages by weight being based on the total weight of the composition.

Non-network forming block copolymers, once modified pursuant to the present invention, are expected to be excellent viscosity index improvers with dispersancy characteristics.

"Non-network forming block copolymers" means those polymers having effectively only one alkenyl arene polymer block A. Structural configurations included therein are represented as follows:

(1) B-A

(2) B-A-B

(3) $(B\text{-}A)_n X$

(4) $(B\text{-}A)_y X\text{-}(B)_z$

wherein A is a polymer block of an alkenyl arene, B is a polymer block of a conjugated diene, X is a residual group of a polyfunctional coupling agent having two or more functional groups, y and z are, independently, integers of 1 to 20 and n is an integer of 2 to 40. Furthermore, the above-mentioned branched configurations may be either symmetrical or asymmetrical with respect to the blocks radiating from X.

As is readily apparent from the foregoing structures, there is "effectively" only one alkenyl arene polymer block A. In structures (1) and (2) there is only one block A in each. In structures (3) and (4), each of the blocks A are molecularly attached to each other via a polyfunctional coupling agent and as such is in effect only one block A with B blocks radiating out therefrom. Thus, the network structure formed by A-B-A type polymers utilizing the domains is not possible in these non-network forming block copolymers. Typical block copolymers of the most simple configuration (structure (1) above) would be polystyrene-polybutadiene (S-B) and polystyrene-polyisoprene (S-I).

It will be understood that both blocks A and B may be either homopolymer, random or tapered copolymer blocks as long as each block contain more than 50 percent by weight of at least one class of the monomers characterizing the blocks defined hereinbefore. For example, blocks A may comprise styrene/alpha-methylstyrene copolymer blocks or styrene/butadiene random or tapered copolymer blocks as long as the blocks individually contain more than 50 percent by weight of alkenyl arenes. The A blocks are preferably monoalkenyl arene. The term "monoalkenyl arene" will be taken to include particularly those of the benzene series such as styrene and its analogs and homologs including o-methylstyrene, p-methylstyrene, p-tert-butylstyrene, 1,3-dimethylstyrene, alpha-methylstyrene and other ring alkylated styrenes, particularly ring-methylated styrenes, and other monoalkenyl polycyclic aromatic compounds such as vinyl naphthalene, vinyl anthracene and the like. The preferred monoalkenyl arenes are monovinyl monocyclic arenes such as styrene and alpha-methylstyrene, and styrene is particularly preferred.

The blocks B may comprise homopolymers of conjugated diene monomers, copolymers of two or more conjugated dienes, and copolymers of one of the dienes with a monoalkenyl arene as long as the blocks B each contain more than 50 percent by weight of conjugated diene units. The conjugated dienes are preferably ones containing from 4 to 8 carbon atoms. Examples of such suitable conjugated diene monomers include: 1,3-butadiene (butadiene), 2-methyl-1,3-butadiene (isoprene), 2,3-dimethyl-1,3-butadiene, 1,3-pentadiene (piperylene), 1,3-hexadiene, and the like. Mixtures of such conjugated dienes may also be used. The preferred conjugated dienes are butadiene and isoprene.

Preferably, the block copolymers of conjugated dienes and alkenyl arene hydrocarbons which may be utilized include any of those which exhibit elastomeric properties; and those butadiene derived elastomers which have 1,2-microstructure contents prior to hydrogenation of from 7 to 100 percent, preferably from 25 to 65 percent, more preferably from 35 to 55 percent. Such block copolymers may contain various ratios of conjugated dienes to alkenyl arenes.

For viscosity index improving purposes, the alkenyl arene content preferably ranges from 20 to 70 percent by weight.

The average molecular weights of the individual blocks may vary within certain limits. In most instances, the monoalkenyl arene blocks will have average molecular weights in the order of 1,000 to 125,000, preferably 1,000 to 60,000, while the conjugated diene blocks either before or after hydrogenation will have average molecular weights on the order of 10,000 to 450,000, preferably 10,000 to 150,000. The total average molecular weight of the multiblock copolymer is typically on the order of 11,000 to 2,500,000. These molecular weights are most accurately determined by gel permeation chromatography or by gel permeation - low angle light scattering.

The block copolymer may be produced by any well known block polymerization or copolymerization procedures including the well known sequential addition of monomer techniques, incremental addition of monomer technique or coupling technique as illustrated in, for example, U.S. Patent Nos. 3,251,905; 3,390,207; 3,598,887 and 4,219,627. As is well known in the block copolymer art, tapered copolymer blocks can be incorporated in the multiblock copolymer by copolymerizing a mixture of conjugated diene and alkenyl arene monomers utilizing the difference in their copolymerization reactivity rates. Various patents describe the preparation of multiblock copolymers containing tapered copolymer blocks including U.S. Patent Nos. 3,251,905; 3,265,765; 3,639,521 and 4,208,356. Additionally, various patents describe the preparation of symmetric and asymmetric radial and star block copolymers including U.S. Patent Nos. 3,231,635; 3,265,765; 3,322,856; 4,391,949; and 4,444,953.

Though the afore-mentioned illustrative patents are slanted to producing network forming block copolymers (e.g. A-B-A), the non-network forming block copolymers of the present application may be prepared by an obvious variation or modification of these procedures; for example, 1) sequential polymerization of an A-B or B-A-B block copolymer; 2) utilizing a di-initiator to prepare a B-A-B block copolymer; 3) utilizing polyfunctional coupling agents to couple B-A-Li living copolymer segments to form a $(B\text{-}A)_{n}X$ polymer, where X is the residual portion of the polyfunctional coupling agent incorporated as part of the polymer whose presence therein is of insignificant effect to the properties of the resulting polymer and where n is the number of block copolymer segments or arms attached to X; and 4) similarly utilizing polyfunctional coupling agents to couple B-A-Li living copolymer segments and B-Li living homopolymer or diene copolymer segments to form a $(B\text{-}A)_{Y}X\text{-}(B)_{z}$ polymer, where X is as before and y and z represent the number of respective segments or arms attached to X.

It should be observed that the above-described polymers and copolymers may, if desired, be readily prepared by the methods set forth above. However, since many of these polymers and copolymers are commercially available, it is usually preferred to employ the commercially available polymer as this serves to reduce the number of processing steps involved in the overall process.

These polymers and copolymers are hydrogenated to increase their thermal stability and resistance to oxidation. The hydrogenation of these polymers and copolymers may be carried out by a variety of well established processes including hydrogenation in the presence of such catalysts as Raney Nickel, noble metals such as platinum, palladium and the like and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst. Such processes are disclosed in U.S. Patent Nos. Re. 27,145; 3,113,986; 3,700,633; 3,700,748; 3,763,044; 3,772,196; 3,965,019; 4,036,910; and 4,226,952. The polymers and copolymers are hydrogenated in such a manner as to produce hydrogenated polymers and copolymers having a residual ethylenic unsaturation content in the polydiene block of not more than 20 percent, preferably less than 10 percent, more preferably less than 5 percent and yet more preferably at most 2 percent, of their original ethylenic unsaturation content prior to hydrogenation.

The modified block copolymers according to the present invention are preferably grafted or substituted in the alkenyl arene block by the metalation process as later described herein. Exemplary metalation reactions are given below, utilizing an exemplary styrene unit from a polystyrene segment of a suitable block copolymer:

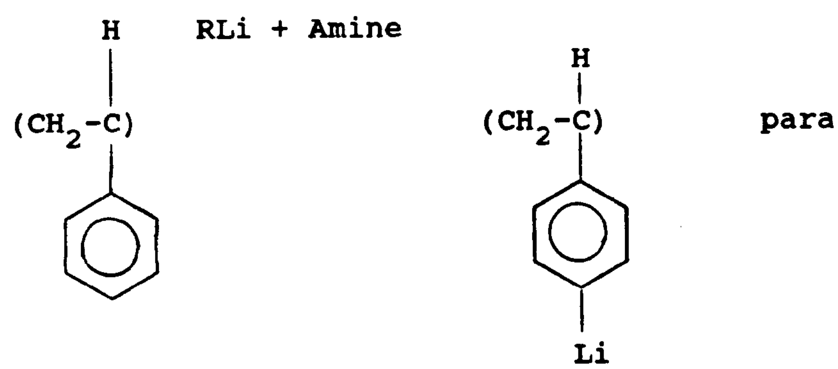

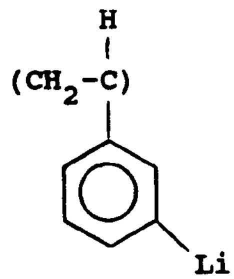

meta

Where: RLi = Alkyl Lithium

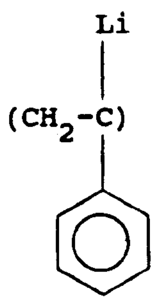

benzylic
(minor product)

An electrophile, such as an isocyanate or an imine is subsequently reacted with the metalated block copolymer and quenched (contacted) with a proton source to yield amide or primary or secondary amine functional groups at the above-indicated metalated sites. Alternatively, the electrophile carbon dioxide is reacted with the metalated block copolymer to yield carboxylic acid groups at the above-indicated metalated sites and in turn reacted with a primary or secondary amine to yield a quaternary ammonium salt which upon heating yields amide functional groups at these same sites.

The structure of the substituted block copolymer specifically determined by locating the functionality on the alkenyl arene block gives the block copolymer a substantially greater degree of thermal stability.

In general, any materials having the ability to react with the metalated base polymer are operable for the purposes of this invention.

In order to incorporate functional groups into the metalated base polymer, electrophiles capable of reacting with the metalated base polymer are necessary. Reactants may be polymerizable or nonpolymerizable; however, preferred electrophiles are nonpolymerizable when reacted with metalated polymers such as those utilized herein.

There are many electrophiles and electrophilic graftable molecules that are 1) capable of reacting with a lithiated block copolymer and 2) contain an amine functional site. As an example, consider an N,N-dialkyl amino-acid ester, an electrophilic graftable molecule. The electrophilic site in

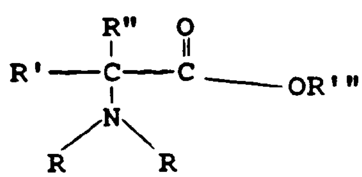

this exemplary molecule is the ester moiety

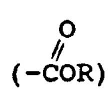

which would be expected to react with the lithiated polymer affording a ketone

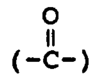

with the appended tertiary amine site

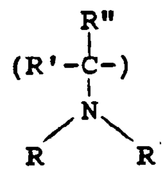

This method of using an electrophilic graftable molecule having an appended amine site as a route to attach nitrogen-containing groups to the block copolymer suffers from the disadvantage that the product of the reaction of the electrophilic portion of the molecule with the lithiated polymer is itself a functional site (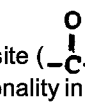, a ketone in this example). In some applications it is undesirable to introduce this second site of functionality in the process of incorporation of the amine. Additionally, such tertiary amine functional groups would not be expected to react in a grafting manner with a polymer containing a primary or secondary amine.

A method for the direct incorporation of an amide or amine would involve the reaction of the lithiated polymer with, respectively, a suitable isocyanate or imine, followed by quenching (contacting) with a proton source (e.g. water) (see "The Chemistry of Organolithium Compounds," B. J. Wakefield, Pergamon Press, Oxford, England, 1974 p. 109 and 128). Thus:-

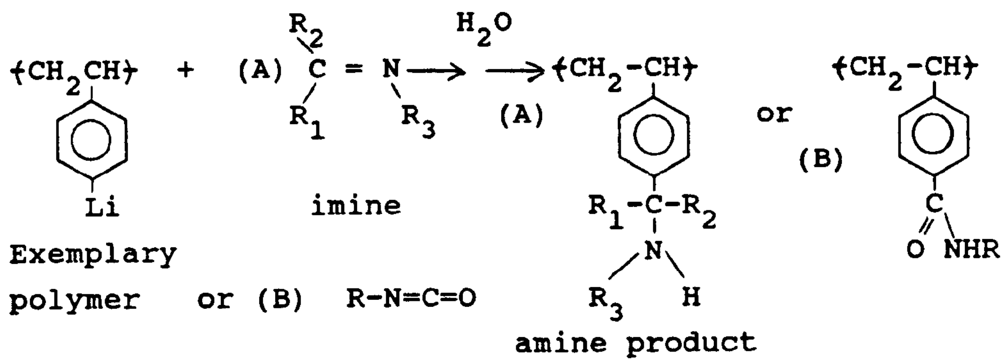


where R, $R_1$, $R_2$ and $R_3$ are alkyl, cycloalkyl or aryl radicals. Additionally, $R_3$ is a hydrogen or a silyl radical, such as $-Si(CH_3)_3$, $-Si-(CH_2-CH_3)_3$ and $-Si-(C_6H_5)_3$. As shown in the above equation, this method would introduce an amide or amine functional site (in particular, a primary or secondary amine functional site) without the undesirable side effect of introducing a second functional species.

Alternatively, amide functional groups may be introduced indirectly by reaction of the lithiated block copolymer with carbon dioxide to form carboxylic acid groups at the lithiated sites. These carboxylic acid groups are subsequently reacted with a primary or secondary amine and heated, thereby resulting in amide functional groups. This method would also introduce an amide functional site without the undesirable side effect of introducing a second functional species.

The quantity of amide or amine functional groups in the modified block copolymer is dependent on the content and the aromatic structure of the alkenyl arene therein. Once these parameters are fixed, the number of such groups present is dependent on the degree of functionality desired between a minimum and maximum degree of functionality based on these parameters. The minimum degree of functionality corresponds on the average at least one (1), preferably at least three (3), amide or amine functional groups per molecule of the block copolymer. It is presently believed that the addition of one (1) electrophile per aromatic ring of the A blocks is limiting. Thus, if the electrophile isocyanate (R-N=C=O) or imine ($R_1R_2C=NR_3$) which contains only one amide or amine functional group is used, this translates to one (1) amide or amine group per aromatic ring as a maximum functionality level. Preferably, the functionality level is on the average from one (1) amide or amine functional group per molecule of the copolymer to one amide or amine functional group per aromatic ring of

the A block, and more preferably on the average from three (3) amide or amine functional groups per molecule of the copolymer to one amide or amine functional group per aromatic ring of the A block.

The block copolymers, as modified, may still be used for any purpose for which an unmodified material (base polymer) was formerly used. That is, they may be used for adhesives and sealants, modifiers for lubricants, fuels and the like, or compounded and extruded and molded in any convenient manner.

The polymers may be prepared by any convenient manner. Preferably, the polymer is prepared such that the functional groups are incorporated into the block copolymer primarily on the aromatic portion of the alkenyl arene block via metalation.

Metalation may be carried out by means of a complex formed by the combination of a lithium component which can be represented by $R'(Li)_x$ with a polar metalation promoter. The polar compound and the lithium component can be added separately or can be premixed or pre-reacted to form an adduct prior to addition to the solution of the hydrogenated copolymer. In the compounds represented by $R'(Li)_x$, the R′ is usually a saturated hydrocarbon radical of any length whatsoever, but ordinarily containing up to 20 carbon atoms, and may also be a saturated cyclic hydrocarbon radical of e.g. 5 to 7 carbon atoms. In the formula $R'(Li)_x$, x is an integer of 1 to 3. Representative species include, for example: methyllithium, isopropyllithium, sec-butyllithium, n-butyllithium, t-butyllithium, n-dodecyllithium, 1,4-dilithiobutane, 1,3,5-trilithiopentane, and the like. The lithium alkyls must be more basic than the product, metalated polymer alkyl. Of course, other alkali metal or alkaline earth metal alkyls may also be used; however, the lithium alkyls are presently preferred due to their ready commercial availability. In a similar way, metal hydrides may also be employed as the metalation reagent but the hydrides have only limited solubility in the appropriate solvents. Therefore, the metal alkyls are preferred for their greater solubility which makes them easier to process.

Lithium compounds alone usually metalate copolymers containing aromatic and olefinic functional groups with considerable difficulty and under high temperatures which may tend to degrade the copolymer. However, in the presence of tertiary diamines and bridgehead monoamines, metalation proceeds rapidly and smoothly.

Generally, the lithium metalates the position allylic to the double bonds in an unsaturated polymer. In the metalation of polymers in which there are both olefinic and aromatic groups, the metalation will occur in the position in which metalation occurs most readily, as in positions (1) allylic to the double bond (2) at a carbon to which an aromatic is attached, (3) on an aromatic group, or (4) in more than one of these positions. In the metalation of saturated polymers having aromatic groups as is preferably the case herein, the metalation will occur primarily on an aromatic group and as a minor product at a carbon to which an aromatic is attached. In any event, it has been shown that a very large number of lithium atoms are positioned variously along the polymer chain, attached to internal carbon atoms away from the polymer terminal carbon atoms, either along the backbone of the polymer or on groups pendant therefrom, or both, in a manner depending upon the distribution of reactive or lithiatable positions. This distinguishes the lithiated copolymer from simple terminally reactive polymers prepared by using a lithium or even a polylithium initiator in polymerization thus limiting the number and the location of the positions available for subsequent attachment. With the metalation procedure described herein, the extent of the lithiation will depend upon the amount of metalating agent used and/or the groups available for metalation. The use of a more basic lithium alkyl such as tert-butyllithium alkyl may not require the use of a polar metalation promoter.

The polar compound promoters include a variety of tertiary amines, bridgehead amines, ethers, and metal alkoxides.

The tertiary amines useful in the metalation step have three saturated aliphatic hydrocarbon groups attached to each nitrogen and include, for example:

(a) Chelating tertiary diamines, preferably those of the formula $R_2N\text{-}(CH_2)_y\text{-}NR_2$ in which each R can be the same or different, straight- or branched-chain alkyl group of any chain length containing up to 20 carbon atoms, or more, all of which are included herein and y can be any whole number from 2 to 10, and particularly the ethylene diamines in which all alkyl substituents are the same. These include, for example: tetramethylethylenediamine, tetraethylethylenediamine, tetradecylenediamine, tetraoctylhexylenediamine, tetra-(mixed alkyl) ethylene diamines, and the like.

(b) Cyclic diamines can be used, such as, for example, the N,N,N′,N′-tetraalkyl 1,2-diamino cyclohexanes, the N,N,N′,N′-tetraalkyl 1,4-diamino cyclohexanes, N,N′-dimethylpiperazine, and the like.

(c) The useful bridgehead diamines include, for example, sparteine, triethylenediamine and the like.

Tertiary monoamines such as triethylamine are generally not as effective in the lithiation reaction. However, bridgehead monoamines such as 1-azabicyclo[2.2.2] octane and its substituted homologs are effective.

Ethers and the alkali metal alkoxides are presently less preferred than the chelating amines as activators for the metalation reaction due to somewhat lower levels of incorporation of functional group containing compounds onto the copolymer backbone in the subsequent grafting reaction.

In general, it is most desirable to carry out the lithiation reaction in an inert solvent such as saturated hydrocarbons. Aromatic solvents such as benzene are lithiatable and may interfere with the desired lithiation of the hydrogenated copolymer. The solvent/copolymer weight ratio which is convenient generally is in the range of 5:1 to 20:1. Solvents such as chlorinated hydrocarbons, ketones, and alcohols, should not be used because they destroy the lithiating compound.

Polar metalation promotors may be present in an amount sufficient to enable metalation to occur, e.g. amounts between 0.01 and 100 or more preferably between 0.1 to 10 equivalents per equivalent of lithium alkyl.

The equivalents of lithium employed for the desired amount of lithiation generally range from such as 0.001 to 3.0 per alkenyl arene hydrocarbon unit in the copolymer, presently preferably 0.01 to 1.0 equivalents per alkenyl arene hydrocarbon unit in the copolymer to be modified. The molar ratio of active lithium to the polar promoter can vary from such as 0.01 to 10.0. A preferred ratio is 0.5 to 2.0.

The amount of lithium alkyl employed can be expressed in terms of the lithium alkyl to alkenyl arene hydrocarbon molar ratio. This ratio may range from a value of 1 (one lithium alkyl per alkenyl arene hydrocarbon unit) to as low as 1 x $10^{-3}$ (1 lithium alkyl per 1000 alkenyl arene hydrocarbon units).

The process of lithiation can be carried out at temperatures in the range of such as -70°C to +150° C, presently preferably in the range of 25°C to 75°C, the upper temperatures being limited by the thermal stability of the lithium compounds. The lower temperatures are limited by considerations of production cost, the rate of reaction becoming unreasonably slow at low temperatures. The length of time necessary to complete the lithiation and subsequent reactions is largely dependent upon mixing conditions and temperature. Generally, the time can range from a few seconds to 72 hours, presently preferably from 1 minute to 1 hour.

The next step in the process of preparing the modified block copolymer is the treatment of the lithiated hydrogenated copolymer, in solution, without quenching in any manner which would destroy the lithium sites, with a species capable of reacting with a lithium anion. These species are selected from the class of molecules called electrophiles and must contain functional groups capable of undergoing nucleophilic attack by a lithium anion. Specifically, the electrophiles called imines and isocyanates which become the desired amine or amide functional group, respectively, are of interest in the present invention. As such, the modified block copolymer herein is the reaction product of an electrophile with an activated base (unmodified hydrogenated) block copolymer primarily at lithium anion sites on the aromatic substrates thereof, as opposed to the reaction product of an electrophile (strong Lewis acid) with an unactivated base block copolymer on the aromatic substrates thereof.

The modified block copolymers of the present invention are expected to be useful as additives for lubricants, in which they would function primarily as dispersants and viscosity modifiers. These polymers may be employed in a variety of lubricants based on diverse oils of lubricating viscosity, including natural and synthetic lubricating oils and mixtures thereof. Examples of such lubricating oils are disclosed in U.S. Patent Nos. 4,145,298; 4,357,250; and 4,670,173. An illustrative list of such lubricants include crankcase lubricating oils for spark-ignited and compression-ignited internal combustion engines, including automobile and truck engines, two-cycle engines, aviation piston engines, marine and railroad diesel engines, and the like. Such lubricant compositions may also be used in gas engines, stationary power engines and turbines and the like. Automatic transmission fluids, transaxle lubricants, gear lubricants, metal-working lubricants, hydraulic fluids and other lubricating oil and grease compositions may also benefit from the incorporation therein of the modified block copolymers of this invention.

The modified block copolymer of the present invention contains an effective amount of nitrogen for imparting suitable dispersancy to the block copolymers which are suitable as viscosity index improvers. Such modified block copolymers are non-network forming block copolymers to which has been grafted the effective amount of nitrogen via a nitrogen-containing functional group, which herein is an amide or amine group. The effective amount of nitrogen grafted thereto is at least 0.01 percent by weight based on the base block copolymer, more preferably from 0.01 to 5 percent by weight and yet more preferably from 0.05 to 0.5 percent by weight. Commercially available non-network forming base block copolymers suitable for modification are available from Shell Chemical under the marks Shellvis· 40 and 50.

Generally, the lubricants of the present invention contain an effective amount of the modified block copolymer of the present invention for dispersing insoluble inpurities and for improving viscosity properties. Normally, this amount will be from 0.01 to 10 percent by weight based on the total weight of the lubricant, preferably from 0.5 to 5 percent by weight. Formulations for different lubricant applications are known in the art, for example, those given in U.S. Patent No. 4,145,298, particularly in column 10, lines 16 to 32.

The lubricants of the present invention are also contemplated to use other additives in combination with the modified block copolymers of this invention. Such additives include, for example, auxiliary detergents and dispersants of the ash-producing or ashless type, corrosion- and oxidation-inhibiting agents, pour point depressing agents, extreme pressure agents, color stabilizers and anti-foam agents. Examples of such additives are disclosed in U.S. Patent Nos. 4,145,298; 4,357,250; and 4,670,173.

The modified block copolymers of this invention may be added directly to the lubricant. Preferably, however,

these block copolymers are diluted with a substantially inert, normally liquid organic diluent such as those disclosed in U.S. Patent Nos. 4,145,298; 4,357,250; and 4,594,378. These concentrates usually contain from 5 to 90 percent by weight of the modified block copolymer of the present invention based on the total weight of the concentrate. These concentrates may also contain, in addition, at least one other additive known in the art or described hereinabove.

Additionally, the modified block copolymer is expected to find utility as a gasoline additive. Formulation guidelines and other additives included therein are disclosed, for example, in U.S. Patent No. 4,328,202 (Trepka et al).

To assist those skilled in the art in the practice of this invention, the following Examples are set forth as illustrations. It is to be understood that in the specification and claims herein, unless otherwise indicated, when the amount of block copolymer is expressed in terms of percent by weight, it is meant percent by weight based on the total amount of these materials. Furthermore, it is to be understood that, unless otherwise indicated, when the amount of amide or amine functional groups is expressed in terms of percent by weight (%w), it is meant percent by weight based on the base block copolymer. Injection molded bars of these compositions may be tested using the following test procedures in the dry-as-molded state:

Notched Izod toughness: at each end ASTM D-256

Flexural Modulus: ASTM D-790

Having thus broadly described the present invention, it is believed that the same will become even more apparent by reference to the following prophetic examples. It will be appreciated, however, that the examples are presented solely for the purposes of illustration and should not be construed as limiting the invention.

The base (unmodified) block copolymers used was the polystyrene-poly(ethylene/butylene)-polystyrene (S-EB-S) block copolymer shown in Table 1. The base block copolymer was the product of selectively hydrogenating a polystyrene-polybutadiene-polystyrene (S-B-S) block copolymer effected by use of a catalyst comprising the reaction products of an aluminum alkyl compound with nickel carboxylates. The base block copolymer has a residual ethylenic unsaturation of less than about 2% of the original unsaturation in the polybutadiene block and has a residual aromatic unsaturation of greater than 95% of the original unsaturation in the polystyrene block.

**TABLE 1**

| Base Block Copolymer | Styrene Content (wt.%) | Block Styrene Content (wt.%) | Total Mw. | Polymer Structure and Block Mw |
|---|---|---|---|---|
| A | 30 | 30 | 51,500 | 7,700-36,000-7,700 (S-EB-S) |

Remarks:

S - Polymer block composed chiefly of styrene.

EB - Polymer block composed chiefly of hydrogenated polybutadiene and referred to as ethylene/butylene.

Mw - Weight average molecular weight.

Per the following examples 1 through 3, the base block copolymer was first modified to a particular degree

of carboxyl group functionality (content) by grafting carboxyl groups onto the polystyrene blocks via the metalation process described herein. The modified block copolymers were then further modified by reacting same with a primary or secondary amine to form amide functional groups on the polymer.

Example 1:

Modified Block Copolymer - Carboxyl Functionality

In this experiment, a modified block copolymer "B" was prepared utilizing the base block copolymer "A". A 5% (wt/wt) solution of Polymer A (see Table 1) in cyclohexane (1400 kg) was treated, in a closed vessel under nitrogen, with the metalation promoter, N,N,N′,N′-tetramethylethylenediamine (TMEDA) (6.4 kg, 55 mol) and a titration indicator, 1,1-diphenylethylene (21g, 0.1 mol). This solution was heated with stirring to 50°C and titrated with s-butyllithium solution to remove impurities. At the endpoint of the titration, a slight excess of s-butyllithium reagent added to the indicator forming a benzylic anion which gave the solution a yellow/orange color; the persistence of this color was taken as an indication that the solution was now anhydrous and anaerobic. These conditions were maintained throughout the rest of the experiment.

The metalation reagent, s-butyllithium (18.6 kg of a 12% (wt/wt) solution in cyclohexane, 35 mol), was added to the reaction mixture over a period of 15 minutes. The lithiated polymer cement was quite viscous and yellow in color. An aliquot of the cement was removed and treated with an excess of $D_2O$. This procedure placed a deuterium atom on the polymer at sites which had been lithiated. Analysis of the deuterated polymer using a Deuterium NMR technique found 89% of the deuterium was attached to the aromatic ring. Appropriate control experiments showed that the remainder of the deuterium label was at benzylic centers (about 5%) in the polystyrene segment and at allylic centers (about 6%) in the rubber of the polymer. These results showed that the polymer was lithiated principally in the styrene blocks (at least 94%).

After 1 hour in the lithiation reactor (60°C), the cement was transferred to a closed vessel containing carbonated (64.5 kg of $CO_2$, 1500 mol) tetrahydrofuran (THF) (about 1400 litres). The lithiated polymer cement was introduced below the surface of the $CO_2$/THF mixture. While carboxylation was likely instantaneous, the mixture was stirred at room temperature for 4 hr. The reactor product was acidified by the addition of 11.8 kg of acetic acid (200 mol). Modified block copolymer B was recovered by steam coagulation and dried at 50-60°C in a vacuum oven.

To measure the polymer bound carboxyl acid (-COOH) content of polymer B, an aliquot of the finished polymer was dissolved in THF and titrated to a phenolphthalein endpoint using 0.01N KOH in methanol. The titration found 1.15%wt -COOH.

To determine the total carboxylate content, both $-COO^-$ and -COOH moieties of Polymer B, an aliquot of the finished polymer was dissolved in cyclohexane at a 10% solids level and treated with an equal volume of acetic acid. Control experiments had shown that the acid treatment converted polymer bound $-COO^-$ to -COOH species. The acidified mixture was repeatedly washed with $H_2O$ until the wash sample was neutral to remove excess acetic acid and acetate salts. The fully acidified polymer was precipitated in isopropanol, dried and titrated as outlined above. The titration found 1.15%wt -COOH; the same result as had been observed for the as finished polymer. By difference, we concluded that the as finished product, Polymer B, contained no carboxylate salt; Polymer B was in the all acid form -COOH.

An infrared analysis based upon characteristic IR bands for the -COOH species (1690 $cm^{-1}$) and polystyrene (1590 $cm^{-1}$) (in essence an internal standard signal) corroborated the titration results. The IR data were from a solution cast film of Polymer B.

TABLE 2

| Modified Block co-polymer | Base Block co-polymer | Carboxyl Function-ality (%-COOH) | Ratio of Carboxyl Group to Alkenyl Arene Units in Base Block Copolymer | Carboxyl Groups per Molecule of Base Block co-polymer |
|---|---|---|---|---|
| B | A | 1.15 | 1:12 | 13.2 |

Example 2:

Modified Block Copolymer Quaternary Ammonium Salt

In this experiment, a quaternary ammonium salt of the carboxylated block copolymer "B" was prepared. A 6.27% (wt/wt) solution of Polymer "B" (See Table 2) was prepared by dissolving 81.6 grams of Polymer B in 1219.4 grams of THF (cyclohexane may also be used). From this solution a 174.8 gram aliquot was placed in a 300 ml glass vessel, and lauryl amine (.0042 mole, 0.8 gram, which corresponds to a 50% excess) was added thereto. The reaction mixture was agitated for 2 hours. Isolation of the reaction product, Polymer C, was accomplished by coagulation from isopropanol, followed by several hot water washes until a pH 7 was attained. Polymer C was thereafter dried in a vacuum oven at 70°C.

Polymer B was characterized by IR (C=O stretch at 1570 $cm^{-1}$) and analyzed for nitrogen (N) content using chemiluminescence technique. Conversion was found to be about 68%, or approximately 9 quaternary ammonium salt sites distributed between the two polystyrene endblocks.

Example 3:

Modified Block Copolymer - Amide Functionality

In this experiment, block copolymer, Polymer D, having amide functionality in the styrene segment of the copolymer was prepared. A 3.8% (wt/wt) solution of Polymer C was prepared by dissolving 1.53 grams of Polymer C in 35 grams of THF. The resulting solution was divided into 12 aliquots, each placed into glass recrystallizing dishes. The solvent was allowed to evaporate from the solution for 24 hours, resulting in the formation of thin films of Polymer C. The films were then heated in the temperature range of about 165°C to about 200°C in a vented oven. The conversion from the quaternary ammonium salt to the amide was monitored by IR (peak at 1570 $cm^{-1}$ dispersed corresponding with the appearance of peaks at 3420 $cm^{-1}$ and 1715 $cm^{-1}$ for N-H and C=O in the amide, respectively). 100% conversion of the quaternary ammonium salt to the amide appeared to occur at about 175°C after approximately 90 minutes.

Alternative possible procedures are as follows.

The formation of block copolymers having amide functionality in the styrene segment of the copolymer would alternately be envisioned to proceed in two steps - 1) lithiation of the starting block copolymer followed by 2) reaction with an isocyanate. Aqueous work-up of the product would afford a block copolymer having N-alkyl, N-cycloalkyl, or N-aryl amide functionality in the styrene segment of the polymer chain.

A suitable base block copolymer for this reaction would be an anionically polymerized styrene-butadienestyrene (7,700-36,100-7,700 block molecular weights) block copolymer having a 1,2-butadiene addition content

greater than 35% which had been selectively hydrogenated to afford a styrene-ethylene/butylene-styrene block copolymer of the same molecular weight but having less than 5% of the ethylenic (C=C) unsaturation of the starting diene polymer. This material, Polymer A, would be carried forward in the lithiation reaction using the following procedure.

A 5% (wt/wt) solution of Polymer E in cyclohexane (1400 kg) would be treated, in a closed vessel under nitrogen, with the metalation promoter, N,N,N′,N′-tetramethylethylenediamine (TMEDA) (6.4 kg, 55 mol) and a titration indicator, 1,1-diphenylethylene (21g, 0.1 mol). This solution would be heated with stirring to 50°C and titrated with s-butyllithium solution to remove impurities. At the endpoint of the titration, a slight excess of s-butyllithium reagent would react with the indicator forming a benzylic anion which would give the solution a yellow/orange color; the persistence of this color would be taken as an indication that the solution was now anhydrous and anaerobic. These conditions would be maintained throughout the rest of the experiment.

The metalation reagent, s-butyllithium (18.6 kg of a 12% (wt/wt) solution in cyclohexane, 35 mol), would be added to the reaction mixture over a period of 15 minutes. The lithiated polymer cement would be quite viscous and yellow in color. An aliquot of the cement would be removed and treated with an excess of $D_2O$. This procedure places a deuterium atom on the polymer at sites which had been lithiated. Analysis of the deuterated polymer using a Deuterium NMR technique would be expected to show that about 89% of the deuterium was attached to the aromatic ring attached to the aromatic ring. Appropriate control experiments would show that the remainder of the deuterium label was at benzylic centers (about 5%) in the polystyrene segment and at allylic centers (about 6%) in the rubber of the polymer. These results would show that the polymer was lithiated principally in the styrene blocks (at least 94%).

The procedure for the reaction of lithiated Polymer E with an isocyanate is a modification of a procedure for the reaction of an alkyl isocyanate with a non-polymeric alkyl lithium reagent as described on p. 128 in "The Chemistry of Organolithium Compounds," B. J. Wakefield, Pergammon Press, Oxford, England, 1974 (see also references therein).

After 1 hour in the lithiation reactor (60°C), the metallated polymer cement would be transferred to a closed vessel containing phenyl isocyanate (4.6 kg, 38.6mol) in anhydrous tetrahydrofuran (THF) (about 1400 litres). The lithiated polymer cement would be introduced below the surface of the isocyanate/THF mixture. While reaction would likely be instantaneous, the mixture would be stirred at room temperature for 4 hrs. The reactor product would be neutralized by the addition of acetic acid to a phenolphthalein endpoint. The product, Polymer F, would be isolated by steam coagulation and dried at 50-60°C in a vacuum oven.

An aliquot of Polymer F would be analyzed for N content using a chemiluminescene technique. Analysis would be expected to find about 0.36% wt of polymer bound N. This level of functionality would correspond to 13 N-phenylamide sites per polymer molecule. Polymer F would be expected to be an amidated block copolymer having about 13 N-phenylamide sites distributed between the two polystyrene end segments.

## Modified Block Copolymer - Amine Functionality

The formation of block copolymers having amine functionality in the styrene segment of the copolymer can be envisioned to proceed in two steps - 1) lithiation of the starting block copolymer followed by 2) reaction with an arylimine. Aqueous work-up of the product would afford a block copolymer having secondary amine functionality in the styrene segment of the polymer chain.

A suitable base block copolymer for this reaction would be an anionically polymerized styrene-butadienestyrene (7,700-36,100-7,700 block molecular weights) block copolymer having a 1,2-butadiene addition content greater than 35% which had been selectively hydrogenated to afford a styrene-ethylene/butylene-styrene block copolymer of the same molecular weight but having less than 5% of the ethylenic (C=C) unsaturation of the starting diene polymer. This material, Polymer A, would be carried forward in the lithiation reaction using the following procedure.

A 5% (wt/wt) solution of Polymer A in cyclohexane (1400 kg) would be treated, in a closed vessel under nitrogen, with the metalation promoter, N,N,N′,N′-tetramethylethylenediamine (TMEDA) (6.4 kg, 55 mol) and a titration indicator, 1,1-diphenylethylene (21g, 0.1 mol). This solution would be heated with stirring to 50°C and titrated with s-butyllithium solution to remove impurities. At the endpoint of the titration, a slight excess of s-butyllithium reagent would react with the indicator forming a benzylic anion which would give the solution a yellow/orange color; the persistence of this color would be taken as as an indication that the solution was now anhydrous and anaerobic. These conditions would be maintained throughout the rest of the experiment.

The metalation reagent, s-butyllithium (18.6 kg of a 12% (wt/wt) solution in cyclohexane, 35 mol), would be added to the reaction mixture over a period of 15 minutes. The lithiated polymer cement would be quite viscous and yellow in color. An aliquot of the cement would be removed and treated with an excess of $D_2O$. This procedure places a deuterium atom on the polymer at sites which had been lithiated. Analysis of the deuterated

polymer using a Deuterium NMR technique would be expected to show that about 89% of the deuterium was attached to the aromatic ring. Appropriate control experiments would show that the remainder of the deuterium label was at benzylic centers (about 5%) in the polystyrene segment and at allylic centers (about 6%) in the rubber of the polymer. These results would show that the polymer was lithiated principally in the styrene blocks (at least 94%).

The procedure for the reaction of lithiated Polymer A with an arylimine is a modification of a procedure for the reaction of non-polymeric lithium alkyls with benzophenone N-phenylimine as described on p. 109 in "The Chemistry of Organolithium Compounds," B. J. Wakefield, Pergamon Press, Oxford, England, 1974 (see also references therein).

After 1 hour in the lithiation reactor (60°C), the metallated polymer cement would be transferred to a closed vessel containing benzophenone N-phenylimine (9.9 kg, 38.5 mol) in anhydrous tetrahydrofuran (THF) (about 1400 litres). The lithiated polymer cement would be introduced below the surface of the imine/THF mixture. While reaction would likely be instantaneous, the mixture would be stirred at room temperature for 4 hrs. The reactor product would be neutralized by the addition of acetic acid to a phenolphthalein endpoint. The product, Polymer B, would be isolated by steam coagulation and dried at 50-60°C in a vacuum oven. An aliquot of isolated Polymer B would be analyzed for N (nitrogen) content using a chemiluminescence technique. Analysis would be expected to find about 0.36% wt polymer bound N. This level of functionality would correspond to 13 amine sites per polymer chain. Polymer B would be expected to be an aminated block copolymer having about 13 phenyl amine sites distributed between the two polystyrene end segments.

## Claims

### Claims for the following Contracting States : AT, BE, CH, DE, FR, GB, GR, IT, LI, LU, NL, SE

1. A lubricant composition comprising:

a) from 90 to 99.99 percent by weight of a lubricating oil; and

b) from 0.01 to 10 percent by weight of a viscosity improving, oil soluble, functionalized selectively hydrogenated block copolymer to which has been grafted an amide or a primary or secondary amine functional group, the percentages by weight being based on the total weight of the composition, said functionalized block copolymer comprising:

1) a base block copolymer which comprises

i) from 2 to 70 weight percent of at least one polymer block A, more than 50 percent by weight of said A block being a polymerized alkenyl arene block, and

ii) at least one selectively hydrogenated polymer block B having a residual ethylenic unsaturation content of not more than 20 percent, more than 50 percent by weight of said B block prior to hydrogenation being a polymerized conjugated diene block; said base block copolymer having a structure selected from the group consisting of A-B, B-A-B, $(B-A)-_nX$, and $(B-A)-_yX-(B)_z$ and $(B-A)-_yX-(A)_z$ wherein X is a residual group of a polyfunctional coupling agent having two or more functional groups, y and z are, independently integers of 1 to 20 and n is an integer of 2 to 40; and

2) wherein said amide or amine functional groups are grafted to said base block copolymer on said A blocks, wherein said functionalized block copolymer has been prepared by the process which comprises metalating said base block copolymer, reacting the resulting metalated base block copolymer with an electrophile selected from carbon dioxide, or at least one isocyanate of the general formula $R_4-N=C=O$ or imine of the general formula

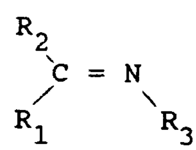

wherein $R_1$, $R_2$ and $R_4$ are the same or different alkyl, cycloalkyl or aryl radicals or combination radicals and $R_3$ is a hydrogen, alkyl, cycloalkyl, aryl or silyl radical, and, when the electrophile is an isocyanate or imine, contacting the resulting product with a proton source, or, when the electrophile is carbon dioxide, reacting the resulting carboxylated base block copolymer with a primary or secondary amine to form a quarternary ammonium salt and heating the quarternary ammonium salt, to produce the functionalized block copolymer.

2. The composition according to claim 1, wherein said amide or amine functional groups are present in an amount such that the nitrogen content of said functionalized block copolymer is from 0.01 to 5 percent by weight based on said base block copolymer.

3. The composition according to claim 1 or 2, wherein

(a) more than 50 percent by weight of each of said A blocks prior to hydrogenation is a polymerized monoalkenyl monocyclic arene block having an average molecular weight of 1,000 to 125,000,

(b) more than 50 percent by weight of each of said B blocks prior to hydrogenation is a polymerized conjugated diene block having an average molecular weight of 10,000 to 450,000,

(c) said A blocks constituting 2 to 70 percent by weight of said base block copolymer,

(d) the residual ethylenic unsaturation of said B block is less than 10 percent of the ethylenic unsaturation of said B blocks prior to hydrogenation, and

(e) the residual aromatic unsaturation of said A blocks is greater than 90 percent of the aromatic unsaturation of said A block prior to hydrogenation.

4. An additive concentrate including a diluent oil and from 5 to 90 percent by weight, based on the total weight of the concentrate, of an oil soluble, functionalized selectively hydrogenated block copolymer to which has been grafted an amide or a primary or secondary amine functional group, said functionalized block copolymer comprising:

1) a base block copolymer which comprises

i) from 2 to 70 weight percent of at least one polymer block A, more than 50 percent by weight of said A block being a polymerized alkenyl arene block, and

ii) at least one selectively hydrogenated polymer block B having a residual ethylenic unsaturation content of not more than 20 percent, more than 50 percent by weight of said B block prior to hydrogenation being a polymerized conjugated diene block; said base block copolymer having a structure selected from the group consisting of A-B, B-A-B, $(B-A)-_nX$, and $(B-A)-_yX-(B)_z$ and $(B-A)-_yX-(A)_z$ wherein X is a residual group of a polyfunctional coupling agent having two or more functional groups, y and z are, independently integers of 1 to 20 and n is an integer of 2 to 40; and

2) wherein said amide or amine functional groups are grafted to said base block copolymer on said A blocks, wherein said functionalized block copolymer has been prepared by the process which comprises metalating said base block copolymer, reacting the resulting metalated base block copolymer with an electrophile selected from carbon dioxide, or at least one isocyanate of the general formula $R_4$-N=C=O or imine of the general formula

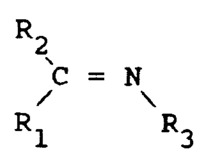

wherein $R_1$, $R_2$ and $R_4$ are the same or different alkyl, cycloalkyl or aryl radicals or combination radicals and $R_3$ is a hydrogen, alkyl, cycloalkyl, aryl or silyl radical, and, when the electrophile is an isocyanate or imine, contacting the resulting product with a proton source, or, when the electrophile is carbon dioxide, reacting the resulting carboxylated base block copolymer with a primary or secondary amine to form a quarternary ammonium salt and heating the quarternary ammonium salt, to produce the functionalized block copolymer.

5. Process for preparing a lubricant composition according to any one of Claims 1 to 3 which comprises preparing a functionalized selectively hydrogenated block copolymer to which has been grafted an amide or a primary or secondary amine functional group, said functionalized block copolymer comprising:

1) a base block copolymer which comprises

i) from 2 to 70 weight percent of at least one polymer block A, more than 50 percent by weight of said A block being a polymerized alkenyl arene block, and

ii) at least one selectively hydrogenated polymer block B having a residual ethylenic unsaturation content of not more than 20 percent, more than 50 percent by weight by said B block prior to hydrogenation being a polymerized conjugated diene block; said base block copolymer having a structure selected from the group consisting of A-B, B-A-B, $(B-A)-_nX$, and $(B-A)-_yX-(B)_z$ and $(B-A)-_yX-(A)_z$ wherein X is a residual group of a polyfunctional coupling agent having two or more functional groups, y and z are, independently integers of 1 to 20 and n is an integer of 2 to 40; and

2) wherein said amide or amine functional groups are grafted to said base block copolymer on said A blocks, which comprises metalating said base block copolymer, reacting the resulting metalated base block

copolymer with an electrophile selected from carbon dioxide, or at least one isocyanate of the general formula $R_4$-N=C=O or imine of the general formula

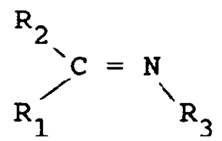

where $R_1$, $R_2$ and $R_4$ are the same or different alkyl, cycloalkyl or aryl radicals or combination radicals and $R_3$ is a hydrogen, alkyl, cycloalkyl, aryl or silyl radical, and, when the electrophile is an isocyanate or imine, contacting the resulting product with a proton source, or, when the electrophile is carbon dioxide, reacting the resulting carboxylated base block copolymer with a primary or secondary amine to form a quarternary ammonium salt and heating the quarternary ammonium salt, to produce the functionalized block copolymer; and mixing from 0.01 to 10 percent by weight of the functionalized block copolymer with from 90 to 99.99 percent by weight of a lubricating oil, the percentages by weight being based on the total weight of the composition.

**Claims for the following Contracting State : ES**

1. Process for preparing a lubricant composition which comprises preparing a functionalized selectively hydrogenated block copolymer to which has been grafted an amide or a primary or secondary amine functional group, said functionalized block copolymer comprising:

1) a base block copolymer which comprises

i) from 2 to 70 weight percent of at least one polymer block A, more than 50 percent by weight of said A block being a polymerized alkenyl arene block, and

ii) at least one selectively hydrogenated polymer block B having a residual ethylenic unsaturation content of not more than 20 percent, more than 50 percent by weight of said B block prior to hydrogenation being a polymerized conjugated diene block; said base block copolymer having a structure selected from the group consisting of A-B, B-A-B, $(B-A)-_nX$, and $(B-A)-_yX-(B)_z$ and $(B-A)-_yX-(A)_z$ wherein X is a residual group of a polyfunctional coupling agent having two or more functional groups, y and z are, independently integers of 1 to 20 and n is an integer of 2 to 40; and

2) wherein said amide or amine functional groups are grafted to said base block copolymer on said A blocks, which comprises metalating said base block copolymer, reacting the resulting metalated base block copolymer with an electrophile selected from carbon dioxide, or at least one isocyanate of the general formula $R_4$-N=C=O or imine of the general formula

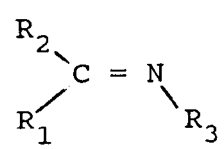

where $R_1$, $R_2$ and $R_4$ are the same or different alkyl, cycloalkyl or aryl radicals or combination radicals and $R_3$ is a hydrogen, alkyl, cycloalkyl, aryl or silyl radical, and, when the electrophile is an isocyanate or imine, contacting the resulting product with a proton source, or, when the electrophile is carbon dioxide, reacting the resulting carboxylated base block copolymer with a primary or secondary amine to form a quarternary ammonium salt and heating the quarternary ammonium salt, to produce the functionalized block copolymer; and mixing from 0.01 to 10 percent by weight of the functionalized block copolymer with from 90 to 99.99 percent by weight of a lubricating oil, the percentages by weight being based on the total weight of the composition.

2. Process according to claim 1, wherein said amide or amine functional groups are present in an amount such that the nitrogen content of said functionalized block copolymer is from 0.01 to 5 percent by weight based on said base block copolymer.

3. Process according to claim 1 or 2, wherein

(a) more than 50 percent by weight of each of said A blocks prior to hydrogenation is a polymerized monoalkenyl monocyclic arene block having an average molecular weight of 1,000 to 125,000,

(b) more than 50 percent by weight of each of said B blocks prior to hydrogenation is a polymerized conjugated diene block having an average molecular weight of 10,000 to 450,000,

(c) said A blocks constituting 2 to 70 percent by weight of said base block copolymer,

(d) the residual ethylenic unsaturation of said B block is less than 10 percent of the ethylenic unsaturation of said B blocks prior to hydrogenation, and

(e) the residual aromatic unsaturation of said A blocks is greater than 90 percent of the aromatic unsaturation of said A block prior to hydrogenation.

4. Process for preparing an additive concentrate which comprises mixing a diluent oil and from 5 to 90 percent by weight, based on the total weight of the concentrate, of an oil soluble, functionalized selectively hydrogenated block copolymer to which has been grafted an amide or a primary or secondary amine functional group, said functionalized block copolymer comprising:

1) a base block copolymer which comprises

i) from 2 to 70 weight percent of at least one polymer block A, more than 50 percent by weight of said A block being a polymerized alkenyl arene block, and

ii) at least one selectively hydrogenated polymer block B having a residual ethylenic unsaturation content of not more than 20 percent, more than 50 percent by weight of said B block prior to hydrogenation being a polymerized conjugated diene block; said base block copolymer having a structure selected from the group consisting of A-B, B-A-B, $(B\text{-}A)\text{-}_nX$, and $(B\text{-}A)\text{-}_yX\text{-}(B)_z$ and $(B\text{-}A)\text{-}_yX\text{-}(A)_z$ wherein X is a residual group of a polyfunctional coupling agent having two or more functional groups, y and z are, independently integers of 1 to 20 and n is an integer of 2 to 40; and

2) wherein said amide or amine functional groups are grafted to said base block copolymer on said A blocks, wherein said functionalized block copolymer has been prepared by the process which comprises metalating said base block copolymer, reacting the resulting metalated base block copolymer with an electrophile selected from carbon dioxide, or at least one isocyanate of the general formula $R_4\text{-N=C=O}$ or imine of the general formula

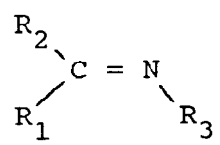

wherein $R_1$, $R_2$ and $R_4$ are the same or different alkyl, cycloalkyl or aryl radicals or combination radicals and $R_3$ is a hydrogen, alkyl, cycloalkyl, aryl or silyl radical, and, when the electrophile is an isocyanate or imine, contacting the resulting product with a proton source, or, when the electrophile is carbon dioxide, reacting the resulting carboxylated base block copolymer with a primary or secondary amine to form a quarternary ammonium salt and heating the quarternary ammonium salt, to produce the functionalized block copolymer.

## Patentansprüche

### Patentanspruche für folgenden Vertragsstaaten : AT, BE, CH, DE, FR, GB, GR, IT, LI, LU, NL, SE

1. Schmiermittelzusammensetzung, umfassend:

a) von 90 bis 99,99 Gew.-% eines Schmieröles; und

b) von 0,01 bis 10 Gew.-% eine viskositätsverbessernden, öllöslichen, funktionalisierten, selektiv hydrierten Blockcopolymers, das mit einer funktionellen Amid- oder einer primären oder sekundären Amingruppe gepfropft worden ist, wobei die Prozentsätze Gewichtsprozentsätze sind und auf das Gesamtgewicht der Zusammensetzung bezogen sind, welches funktionalisiertes Blockcopolymer umfaßt:

1) ein Grundblockcopolymer, das

i) von 2 bis 70 Gew.-% wenigstens eines Polymerblocks A, wobei mehr als 50 Gew.-% dieses Blocks A aus einem polymerisierten Alkenylarenblock gebildet sind, und

ii) wenigstens einen selektiv hydrierten Polymerblock B umfaßt, der einen Restgehalt an ethylenischer Unsättigung von nicht mehr als 20 % aufweist, wobei mehr als 50 Gew.-% dieses Blocks B vor der Hydrierung aus einem polymerisierten, konjugierten Dienblock bestehen; wobei dieses Blockcopolymer eine aus der aus A-B, B-A-B, $(B\text{-}A)\text{-}_nX$, $(B\text{-}A)\text{-}_yX\text{-}(B)_z$ und $(B\text{-}A)\text{-}_yX\text{-}(A)_z$ bestehenden Gruppe ausgewählte Struktur aufweist, worin X eine Restgruppe eines polyfunktionellen Kupplungsmittels mit zwei

oder mehreren funktionellen Gruppen ist, y und z unabhängig voneinander ganze Zahlen von 1 bis 20 bedeuten und n eine ganze Zahl von 2 bis 40 darstellt; und

2) worin die erwähnten funktionellen Amid- oder Amingruppen auf des Grundblockpolymer auf die genannten A-Blöcke aufgepfropft sind, wobei das funktionalisierte Blockcopolyer nach einem Verfahren hergestellt worden ist, das ein Metallieren des Grundblokcopolymers, ein Umsetzen des gebildeten metallierten Grundblockcopolymers mit einem elektrophilen Agens, ausgewählt unter Kohlendioxid oder wenigstens einem Isocyanat der allgemeinen Formel $R_4$-N=C=O oder Imin der allgemeinen Formel

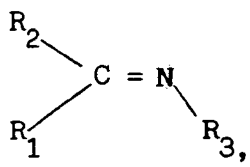

worin $R_1$, $R_2$ und $R_4$ gleiche oder verschiedene Alkyl-, Cycloalkyl- oder Arylreste oder Kombinationsreste sind und $R_3$ einen Wasserstoff-, Alkyl-, Cycloalkyl-, Aryl- oder Silylrest darstellt, und, falls das elektrophile Agens ein Isocyanat oder Imin ist, In-Berührung-Bringen des gebildeten Produktes mit einer Protonenquelle, oder, wenn das elektrophile Agens Kohlendioxid ist, Umsetzen des gebildeten carboxylierten Grundblockcopolymers mit einem primären oder sekundären Amin zur Ausbildung eines quaternären Ammoniumsalzes und ein Erhitzen des quaternären Ammoniumsalzes zur Ausbildung des funktionalisierten Blockcopolymers umfaßt.

2. Zusammensetzung nach Anspruch 1, worin die funktionellen Amid- oder Amingruppen in einer solchen Menge vorliegen, daß der Stickstoffgehalt des funktionalisierten Blockcopolymers 0,01 bis 5 Gew.-%, bezogen auf das Grundblockcopolymer, beträgt.

3. Zusammensetzung nach Anspruch 1 oder 2, worin

(a) mehr als 50 Gew.-% jedes der genannten A-Blöcke vor der Hydrierung aus einem polymerisierten Monoalkenyl-monocyclischen Arenblock mit einem mittleren Molekulargewicht von 1.000 bis 125.000 bestehen,

(b) mehr als 50 Gew.-% jedes der genannten B-Blöcke vor der Hydrierung aus einem polymerisierten, konjugierten Dienblock mit einem mittleren Molekulargewicht von 10.000 bis 450.000 bestehen,

(c) die genannten A-Blöcke 2 bis 70 Gew.-% des Grundblockcopolymers ausmachen,

(d) die verbliebene ethylenische Unsättigung des genannten B-Blocks weniger als 10 % der ethylenischen Unsättigung der B-Blöcke vor der Hydrierung beträgt, und

(e) die verbliebene aromatische Unsättigung der genannter A-Blöcke mehr als 90 % der aromatischen Unsättigung der genannten A-Blöcke vor der Hydrierung ausmacht.

4. Additivkonzentrat, umfassend ein Verdünnungsöl und 5 bis 90 Gew.-%, bezogen auf das Gesamtgewicht des Konzentrats, eines öllöslichen, funktionalisierten, selektiv hydrierten Blckcopolymers, das mit einer funktionellen Amid- oder einer primären oder sekundären Aminogruppe gepfropft worden ist, wobei das funktionalisierte Blockcopolymer umfaßt:

1) ein Grundblockcopolymer, das

i) von 2 bis 70 Gew.-% wenigstens eines Polymerblocks A, wobei mehr als 50 Gew.-% dieses Blocks A aus einem polymerisierten Alkenylarenblock gebildet sind, und

ii) wenigstens einen selektiv hydrierten Polymerblock B umfaßt, der einen Restgehalt an ethylenischer Unsättigung von nicht mehr als 20 % aufweist, wobei mehr als 50 Gew.-% dieses Blocks B vor der Hydrierung aus einem polymerisierten, konjugierten Dienblock bestehen; wobei dieses Blockcopolymer eine aus der aus A-B, B-A-B, $(B\text{-}A)\text{-}_nX$, $(B\text{-}A)\text{-}_yX\text{-}(B)_z$ und $(B\text{-}A)\text{-}_yX\text{-}(A)_z$ bestehenden Gruppe ausgewählte Struktur aufweist, worin X eine Restgruppe eines polyfunktionellen Kupplungsmittels mit zwei oder mehreren funktionellen Grupen ist, y und z unabhängig voreinander ganze Zahlen von 1 bis 20 bedeuten und n eine ganze Zahl von 2 bis 40 darstellt; und

2) worin die erwähnten funktionellen Amid- oder Amingruppen auf das Grundblockpolymer auf die genannten A-Blöcke aufgepfropft sind, wobei das funktionalisierte Blockcopolymer nach einem Verfahren hergestellt worden ist, das ein Metallieren des Grundblockcopolymers, ein Umsetzen des gebildeten metallierten Grundblockcopolymers mit einem elektrophilen Agens, ausgewählt unter Kohlendioxid oder wenigstens einem Isocyanat der allgemeinen Formel $R_4$-N=C=O oder Imin der allgemeinen Formel

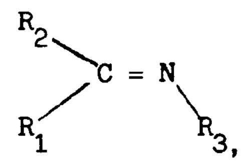

worin $R_1$, $R_2$ und $R_4$ gleiche oder verschiedene Alkyl-, Cycloalkyl- oder Arylreste oder Kombintionsreste sind und $R_3$ einen Wasserstoff-, Alkyl-, Cycloalkyl-, Aryl- oder Silylrest darstellt, und, falls das elektrophile Agens ein Isocyanat oder Imin ist, In-Berührung-Bringen des gebildeten Produktes mit einer Protonenquelle, oder, wenn das elektrophile Agens Kohlendioxid ist, Umsetzen des gebildeten carboxylierten Grundblockcopolymers mit einem primären oder sekundären Amin zur Ausbildung eines quaternären Ammoniumsalzes und ein Erhitzen des quaternären Ammoniumsalzes zur Ausbildung des funktionalisierten Blockcopolymers umfaßt.

5. Verfahren zur Herstellung einer Schmiermittelzusammensetzung nach einem der Ansprüche 1 bis 3, welches ein Ausbilden eines funktionalisierten, selektiv hydrierten Blockcopolymers, das mit einer funktionellen Amid- oder einer primären oder sekundären Aminogruppe gepfropft worden ist, welches funktionelles Blockcopolymer umfaßt:

1) ein Grundblockcopolymer, das

i) von 2 bis 70 Gew.-% wenigstens eines Polymerblocks A, wobei mehr als 50 Gew.-% dieses Blocks A aus einem polymerisierten Alkenylarenblock gebildet sind, und

ii) wenigstens einen selektiv hydrierten Polymerblock B umfaßt, der einen Restgehalt an ethylenischer Unsättigung von nicht mehr als 20 % aufweist, wobei mehr als 50 Gew.-% dieses Blocks B vor der hydrierung aus einem polymerisierten, konjugierten Dienblock bestehen; wobei dieses Blockcopolymer eine aus der aus A-B, B-A-B, $(B\text{-}A)\text{-}_nX$, $(B\text{-}A)\text{-}_yX\text{-}(B)_z$ und $(B\text{-}A)\text{-}_yX\text{-}(A)_z$ bestehenden Gruppe ausgewählte Struktur aufweist, worin X eine Restgruppe eines polyfunktionellen Kupplungsmittels mit zwei oder mehreren funktionellen Gruppen ist, y und z unabhängig voneinander ganze Zahlen von 1 bis 20 bedeuten und n eine ganze Zahl von 2 bis 40 darstellt; und

2) worin die erwähnten funktionellen Amid- oder Amingruppen auf das Grundblockpolymer auf die genannten A-Blöcke aufgepfropft sind, elches Verfahren ein Metallieren des Grundblockcopolymers, ein Umsetzen des gebildeten metallierten Grundblockcopolymers mit einem elektrophilen Agens, ausgewählt unter Kohlendioxid oder wenigstens einem Isocyanat der allgemeinen Formel $R_4\text{-N=C=O}$ oder Imin der allgemeinen Formel

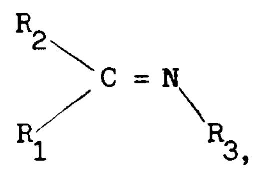

worin $R_1$, $R_2$ und $R_4$ gleiche oder verschiedene Alkyl-, Cycloalkyl- oder Arylreste oder Kombinationsreste sind und $R_3$ einen Wasserstoff-, Alkyl-, Cycloalkyl-, Aryl- oder Silylrest darstellt, und, falls das elektrophile Agens ein Isocyanat oder Imin ist, In-Berührung-Bringen des gebildeten Produktes mit einer Protonenquelle, oder, wenn das elektrophile Agens Kohlendioxid ist, Umsetzen des gebildeten carboxylierten Grundblockcopolymers mit einem primären oder sekundären Amin zur Ausbildung eines quaternären Ammoniumsalzes und ein Erhitzen des quaternären Ammoniumsalzes zur Ausbildung des funktionalisierten Blockcopolymers umfaßt; und ein Vermischen von 0,01 bis 10 Gew.-% des funktionalisierten Blockcopolymers mit 90 bis 99,99 Gew.-% eines Schmieröls umfaßt, wobei die Gewichtsprozentsätze auf das Gesamtgewicht der Zusammensetzung bezogen sind.

**Patentansprüche für folgenden Vertragsstaat : ES**

1. Verfahren zur Herstellung einer Schmiermittelzusammensetzung, welches ein Ausbilden eines funktionalisierten, selektiv hydrierten Blockcopolymers, das mit einer funktionellen Amid- oder einer primären oder sekundären Aminogruppe gepfropft worden ist, welches funktionelles Blockcopolymer umfaßt:

1) ein Grundblockcopolymer, das

i) von 2 bis 70 Gew.-% wenigstens eines Polymerblocks A, wobei mehr als 50 Gew.-% dieses Blocks A aus einem polymerisierten Alkenylarenblock gebildet sind, und

ii) wenigstens einen selektiv hydrierten Polymerblock B umfaßt, der einen Restgehalt an ethylenischer

Unsättigung von nicht mehr als 20 % aufweist, wobei mehr als 50 Gew.-% dieses Blocks B vor der Hydrierung aus einem polymerisierten, konjugierten Dienblock bestehen; wobei dieses Blockcopolymer eine aus ser aus A-B, B-A-B, $(B\text{-}A)\text{-}_nX$, $(B\text{-}A)\text{-}_yX\text{-}(B)_z$ und $(B\text{-}A)\text{-}_yX\text{-}(A)_z$ bestehenden Gruppe ausgewahlte Struktur aufweist, worin X eine Restgruppe eines polyfunktionellen Kupplungsmittels mit zwei oder mehreren funktionellen Gruppe ist, y und z unabhängig voneinander ganze Zahlen von 1 bis 20 bedeuten und n eine ganze Zahl von 2 bis 40 darstellt; und

2) worin die erwähnten funktionellen Amid- oder Amingruppen auf das Grundblockpolymer auf die genannten A-Blöcke aufgepfropft sind, welches Verfahren ein Metallieren des Grundblockcopolymers, ein Umsetzen des gebildeten metallierten Grundblockcopolymers mit einem elektrophilen Agens, ausgewählt unter Kohlendioxid oder wenigstens einem Isocyanat der allgemeinen Formel $R_4\text{-N=C=O}$ oder Imin der allgemeinen Formel

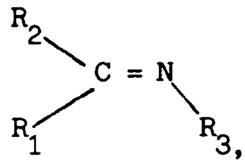

worin $R_1$, $R_2$ und $R_4$ gleiche oder verschiedene Alkyl-, cycloalkyl- oder Arylreste oder Kombinationsreste sind und $R_3$ einen Wasserstoff-, Alkyl-, Cycloalkyl-, Aryl- oder Silylrest darstellt, und, falls das elektrophile Agens ein Isocyanat oder Imin ist, In-Berührung-Bringen des gebildeten Produktes mit einer Portonenquelle, oder, wenn das elektrophile Agens Kohlendioxid ist, Umsetzen des gebildeten carboxylierten Grundblockcopolymers mit einem primären oder sekundären Amin zur Ausbildung eines quaternären Ammoniumsalzes und ein Erhitzen des quaternären Ammoniumsalzes zur Ausbildung des funktionalisierten Blockcopolymers umfaßt; und ein Vermischen von 0,01 bis 10 Gew.-% des funktionalisierten Blockcopolymers mit 90 bis 99.99 Gew.-% eines Schmieröls umfaßt, wobei die Gewichtsprozentsätze auf das Gesamtgewicht der Zusammensetzung bezogen sind.

2. Verfahren nach Anspruch 1, worin die funktionellen Amid- oder Amingruppen in einer solchen Menge vorliegen, daß der Stickstoffgehalt des funktionalisierten Blockcopolymers 0,01 bis 5 Gew.-%, bezogen auf das Grundblockcopolymer, beträgt.

3. Verfahren nach Anspruch 1 oder 2, worin

(a) mehr als 50 Gew.-% jedes der genannten A-Blöcke vor der Hydrierung aus einem polymerisierten Monoalkenyl-monocyclischen Arenblock mit einem mittleren Molekulargewicht von 1.000 bis 125.000 bestehen,

(b) mehr als 50 Gew.-% jedes der genannten B-Blöcke vor der Hydrierung aus einem polymerisierten, konjugierten Dienblock mit einem mittleren Molekulargewicht von 10.000 bis 450.000 bestehen,

(c) die genannten A-Blöcke 2 bis 70 Gew.-% des Grundblockcopolymers ausmachen,

(d) die verbliebene ethylenische Unsättigung des genannten B-Blocks weniger als 10 % der ethylenischen Unsättigung der B-Blöcke vor der Hydrierung beträgt, und

(e) die verbliebene aromatische Unsättigung der genannten A-Blöcke mehr als 90 % der aromatischen Unsättigung der genannten A-Blöcke vor der Hydrierung ausmacht.

4. Verfahren zur Herstellung eines Additivkonzentrats, welches ein Vermischen eines Verdünnungsöles mit 5 bis 90 Gew.-%, bezogen auf das Gesamtgewicht des Konzentrats, eines öllöslichen funktionalisierten, selektiv hydrierten Blockcopolymers umfaßt, das mit einer funktionellen Amid- oder einer primären oder sekundärend Aminogruppe gepfropft worden ist, wobei das funktionalisierte Blockcopolymer umfaßt:

1) ein Grundblockcopolymer, das

i) von 2 bis 70 Gew.-% wenigstens eines Polymerblocks A, wobei mehr als 50 Gew.-% dieses Blocks A aus einem polymerisierten Alkenylarenblock gebildet sind, und

ii) wenigstens einen selektiv hydrierten Polymerblock B umfaßt, der einen Restgehalt an ethylenischer Unsättigung von nicht mehr als 20 % aufweist, wobei mehr als 50 Gew.-% dieses Blocks B vor der Hydrierung aus einem polymerisierten, konjugierten Dienblock bestehen; wobei dieses Blockcopolymer eine aus der aus A-B, B-A-B, $(B\text{-}A)\text{-}_nX$, $(B\text{-}A)\text{-}_yX\text{-}(B)_z$ und $(B\text{-}A)\text{-}_yX\text{-}(A)_z$ bestehenden Gruppe ausgewählte Struktur aufweist, worin X eine Restgruppe eines polyfunktionellen Kupplungsmittels mit zwei oder mehreren funktionellen Gruppen ist, y und z unabhängig voneinander ganze Zahlen von 1 bis 20 bedeuten und n eine ganze Zahl von 2 bis 40 darstellt; und

2) worin die erwähnten funktionellen Amid- oder Amingruppen auf das Grundblockpolymer auf die genannten A-Blöcke aufgepfropft sind, wobei das funktionalisierte Blockcopolymer nach einem Verfahren hergestellt worden ist, das ein Metallieren des Grundblockcopolymers, ein Umsetzen des gebildeten metallierten

Grundblockcopolymers mit einem elektrophilen Agens, ausgewählt unter Kohlendioxid oder wenigstens einem Isocyanat der allgemeinen Formel $R_4$-N=C=O oder Imin der allgemeinen Formel

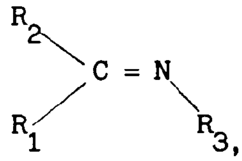

worin $R_1$, $R_2$ und $R_4$ gleiche oder verschiedene Alkyl-, Cycloalkyl- oder Arylreste oder Kombinationsreste sind und $R_3$ einen Wasserstoff-, Alkyl-, Cycloalkyl-, Aryl- oder Silylrest darstellt, und, falls das elektrophile Agens ein Isocyanat oder Imin ist, In-Berührung-Bringen des gebildeten Produktes mit einer Protonenquelle, oder, wenn das elektrophile Agens Kohlendioxid ist, Umsetzen des gebildeten carboxylierten Grundblockcopolymers mit einem primären oder sekundären Amin zur Ausbildung eines quaternären Ammoniumsalzes und ein Erhitzen des quaternären Ammoniumsalzes zur Ausbildung des funktionalisierten Blockcopolymers umfaßt.

## Revendications

## Revendications pour les Etats contractants suivants :AT, BE, CH, DE, FR, GB, GR, IT, LI, LU, NL, SE

1. Une composition lubrifiante comportant :

a) de 90 à 99,99 % en poids d'une huile lubrifiante et

b) de 0,01 à 10 % en poids d'un copolymère séquencé fonctionnalise, sélectivement hydrogéne, soluble dans l'huile et ameliorant la viscosité, auquel a été greffe un groupe fonctionnel amide ou amine primaire ou secondaire, les pourcentages en poids étant bases sur le poids total de la composition, ledit copolymère séquencé fonctionnalise comportant :

1) un copolymère séquencé de base qui comporte :

i) de 2 à 70 % d'au moins une séquencé polymère A, plus de 50 % en poids de ladite séquencé A étant une séquencé alcénylarène polymérisée ; et

ii) au moins une séquencé polymère B, selectivement hydrogénée et présentant une teneur résiduelle en insaturation éthylénique ne dépassant pas 20 %, plus de 50 % en poids de ladite séquencé B avant l'hydrogénation étant une séquencé polymérisée à diène conjugue, ledit copolymère séquencé de base présentant une structure choisie dans le groupe constitue par A-B, B-A-B, $(B\text{-}A)\text{-}_nX$, et $(B\text{-}A)\text{-}_xX\text{-}(B)_z$ et $(B\text{-}A)\text{-}_xX\text{-}(A)_z$ où X est un groupe résiduel d'un agent de couplage polyfonctionnel présentant deux ou plus de deux groupes fonctionnels, y et z sont indépendamment des nombres entiers de 1 à 20 et n est un nombre entier de 2 à 40 ; et

2) dans lequel lesdits groupes fonctionnels amides ou amines sont greffes audit copolymère séquencé de base sur lesdites séquences A, dans lesquelles ledit copolymère séquencé fonctionnalise a été préparé par un procédé qui consiste à faire subir une métallation au copolymère séquencé de base, à faire réagir le copolymère séquencé de base résultant, soumis à la métallation, avec un compose électrophile choisi parmi le dioxyde de carbone, ou au moins un isocyanate de la formule générale $R_4$-N=C=O ou une imine de formule générale

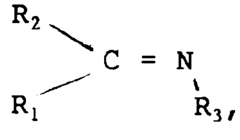

dans laquelle $R_1$, $R_2$ et $R_4$ sont des radicaux alkyle, cycloalkyle ou aryle, identiques ou différents, ou bien des radicaux combines, et $R_3$ est un radical hydrogène, alkyle, cycloalkyle, aryle ou silyle, et lorsque le compose electrophile est un isocyanate ou une imine, à mettre en contact le produit résultant avec une source de protons, ou bien, si le composé électrophile est le dioxyde de carbone, à faire réagir le copolymère séquencé de base carboxyle résultant avec une amine primaire ou secondaire afin de former un sel d'ammonium quaternaire, et à chauffer le sel d'ammonium quaternaire, afin d'obtenir le copolymère séquencé fonctionnalise.

2. La composition selon la revendication 1, dans laquelle lesdits groupes fonctionnels amide ou amine sont présents en une quantité telle que la teneur en azote du copolymère séquencé fonctionnalise est de 0,01 à 5 % en poids en se basant sur ledit copolymère séquencé de base.

3. La composition selon la revendication 1 ou 2 dans laquelle,

(a) plus de 50 % en poids de chacune desdites séquences A avant l'hydrogénation est une séquence monoalcénylarène monocyclique présentant un poids moléculaire moyen de 1000 à 125 000.

(b) plus de 50 % en poids de chacune desdites séquences B avant l'hydrogénation est une séquence diène conjuguée polymérisée, présentant un poids moléculaire moyen de 10 000 à 450 000.

(c) lesdites séquences A constituant de 2 à 70 % en poids dudit copolymère séquence de base.

(d) l'insaturation éthylénique résiduelle de ladite séquencé B est inférieure à 10 % de l'insaturation éthylénique desdites sequences B avant l'hydrogénation, et

(e) l'insaturation aromatique résiduelle desdites séquences A est supérieure à 90 % de l'insaturation aromatique de ladite sequence A avant l'hydrogénation.

4. Un concentre pour addition, comportant une huile diluante et de 5 à 90 % en poids, en se basant sur le poids total du concentre, d'un copolymère séquencé fonctionnalise, sélectivement hydrogéné, soluble dans l'huile, auquel on a greffe un groupe fonctionnel amide ou bien un groupe fonctionnal amine primaire ou secondaire, ledit copolymère séquence fonctionnalise comportant :

1) un copolymère séquencé de base qui comporte :

i) de 2 à 70 % d'au moins une séquencé polymère A, plus de 50 % en poids de ladite séquence A étant une séquencé alcénylarène polymérisée ; et

ii) au moins une séquencé polymère B, sélectivement hydrogénée et présentant une teneur résiduelle en insaturation éthylénique ne dépassant pas 20 %, plus de 50 % en poids de ladite séquencé B avant l'hydrogénation étant une séquencé polymérisée à diène conjugué, ledit copolymère séquencé de base présentant une structure choisie dans le groupe constitue par A-B, B-A-B, $(B\text{-}A)\text{-}_nX$, et $(B\text{-}A)\text{-}_xX\text{-}(B)_z$ et $(B\text{-}A)\text{-}_xX\text{-}(A)_z$ où X est un groupe résiduel d'un agent de couplage polyfonctionnel présentant deux ou plus de deux groupes fonctionnels, y et z sont indépendamment des nombres entiers de 1 à 20 et n est un nombre entier de 2 à 40 ; et

2) dans lequel lesdits groupes fonctionnels amides ou amines sont greffes audit copolymère séquence de base sur lesdites séquences A, dans lesquelles ledit copolymère séquencé fonctionnalise a été préparé par un procédé qui consiste à faire subir une métallation au copolymère séquence de base, à faire réagir le copolymère séquencé de base résultant, soumis à la métallation, avec un compose électrophile choisi parmi le dioxyde de carbone, ou au moins un isocyanate de la formule générale R,-N=C=O ou une imine de formule générale

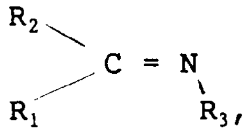

dans laquelle $R_1$, $R_2$ et $R_4$ sont des radicaux alkyle, cycloalkyle ou aryle, identiques ou différents, ou bien des radicaux combinés, et $R_3$ est un radical hydrogène, alkyle, cycloalkyle, aryle ou silyle, et lorsque le composé électrophile est un isocyanate ou une imine, à mettre en contact le produit résultant avec une source de protons, ou bien, si le compose électrophile est le dioxyde de carbone, à faire réagir le copolymère séquencé de base carboxyle résultant avec une amine primaire ou secondaire afin de former un sel d'ammonium quaternaire, et à chauffer le sel d'ammonium quaternaire, afin d'obtenir le copolymère séquencé fonctionnalise.

5. Procédé pour préparer une composition lubrifiante selon l'une quelconque des revendications 1 à 3, qui consiste à préparer un copolymère séquencé fonctionnalisé, hydrogéne de façon sélective, auquel on a greffe un groupe fonctionnal amide ou bien un groupe fonctionnel amine primaire ou secondaire, ledit copolymère séquencé comportant :

1) un copolymère séquencé de base qui comporte :

i) de 2 à 70 % d'au moins une séquencé polymère A, plus de 50 % en poids de ladite séquencé A étant une séquence alcénylarène polymérisée ; et

ii) au moins une séquencé polymère B, selectivement hydrogénée et présentant une teneur résiduelle en insaturation éthylénique ne dépassant pas 20 %, plus de 50 % en poids de ladite séquencé B avant l'hydrogénation étant une séquencé polymérisée à diène conjugué, ledit copolymère séquencé de base présentant une structure choisie dans le groupe constitue par A-B, B-A-B, $(B\text{-}A)\text{-}_nX$, et $(B\text{-}A)\text{-}_xX\text{-}(B)_z$ et

(B-A)-$_x$X-(A)$_z$ où X est un groupe résiduel d'un agent de couplage polyfonctionnel présentant deux ou plus de deux groupes fonctionnels, y et z sont indépendamment des nombres entiers de 1 à 20 et n est un nombre entier de 2 à 40 ; et

2) dans lequel lesdits groupes fonctionnels amides ou amines sont greffes audit copolymère séquence de base sur lesdites séquences A, dans lesquelles ledit copolymère séquencé fonctionnalise a été préparé par un procédé qui consiste à faire subir une métallation au copolymère séquencé de base, à faire réagir le copolymère séquencé de base résultant, soumis à la métallation, avec un compose électrophile choisi parmi le dioxyde de carbone, ou au moins un isocyanate de la formule générale R,-N=C=O ou une imine de formule générale

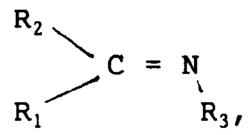

dans laquelle $R_1$, $R_2$ et $R_4$ sont des radicaux alkyle, cycloalkyle ou aryle, identiques ou différents, ou bien des radicaux combines, et $R_3$ est un radical hydrogène, alkyle, cycloalkyle, aryle ou silyle, et lorsque le compose électrophile est un isocyanate ou une imine, à mettre en contact le produit résultant avec une source de protons, ou bien, si le composé électrophile est le dioxyde de carbone, à faire réagir le copolymère séquencé de base carboxyle résultant avec une amine primaire ou secondaire afin de former un sel d'ammonium quaternaire, et à chauffer le sel d'ammonium quaternaire, afin d'obtenir le copolymère séquencé fonctionnalisé ; et à mélanger de 0,01 à 10 % en poids du copolymère séquencé polymérisé avec de 90 à 99,9 % en poids d'une huile lubrifiante, les poucentages en poids étant basés sur le poids total de la composition.

**Revendications pour l'Etat contractant suivant : ES**

1. Procédé pour préparer une composition lubrifiante, qui consiste à préparer un copolymère séquence fonctionnalise, hydrogéné de façon sélective, auquel on a greffe un groupe fonctionnel amide ou bien un groupe fonctionnel amine primaire ou secondaire, ledit copolymère séquencé comportant :

1) un copolymère séquencé de base qui comporte :

i) de 2 à 70 % d'au moins une séquence polymère A, plus de 50 % en poids de ladite séquence A étant une séquencé alcénylarène polymérisée ; et

ii) au moins une séquencé polymère B, selectivement hydrogénée et présentant une teneur résiduelle en insaturation ethylenique ne dépassant pas 20 %, plus de 50 % en poids de ladite séquence B avant l'hydrogénation étant une séquence polymérisée à diène conjugue, ledit copolymère séquencé de base présentant une structure choisie dans le groupe constitue par A-B, B-A-B, (B-A)-$_n$X, et (B-A)-$_y$X-(B)$_z$ et (B-A)-$_x$X-(A)$_z$ où X est un groupe résiduel d'un agent de couplage polyfonctionnel présentant deux ou plus de deux groupes fonctionnels, y et z sont indépendamment des nombres entiers de 1 à 20 et n est un nombre entier de 2 à 40 ; et

2) dans lequel lesdits groupes fonctionnels amides ou amines sont greffes audit copolymère séquencé de base sur lesdites séquences A, dans lesquelles ledit copolymère séquencé fonctionnalise a été préparé par un procédé qui consiste à faire subir une métallation au copolymère séquencé de base, à faire réagir le copolymère séquence de base résultant, soumis à la métallation, avec un composé électrophile choisi parmi le dioxyde de carbone, ou au moins un isocyanate de la formule générale R,-N=C=O ou une imine de formule générale

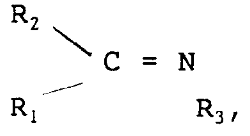

dans laquelle $R_1$, $R_2$ et $R_4$ sont des radicaux alkyle, cycloalkyle ou aryle, identiques ou différents, ou bien des radicaux combines, et $R_3$ est un radical hydrogène, alkyle, cycloalkyle, aryle ou silyle, et lorsque le compose électrophile est un isocyanate ou une imine, à mettre en contact le produit résultant avec une source de protons, ou bien, si le compose électrophile est le dioxyde de carbone, à faire réagir le copolymère séquencé de base carboxylé résultant avec une amine primaire ou secondaire afin de former un sel d'ammonium quaternaire, et à chauffer le sel d'ammonium quaternaire, afin d'obtenir le copolymère séquencé fonctionnalise ; et à mélanger de 0,01 à 10 % en poids du copolymère séquencé polymérisé avec de 90 à 99,9 % en poids d'une huile lubrifiante, les poucentages en poids étant bases sur le poids total de la composition.

2. Procédé selon la revendication 1, dans lequel lesdits groupes fonctionnels amide ou amine sont présents en une quantité telle que la teneur en azote du copolymère séquencé fonctionnalise est de 0,01 à 5 % en poids en se basant sur ledit copolymère séquencé de base.

3. Procédé selon la revendication 1 ou la revendication 2 dans lequel,

(a) plus de 50 % en poids de chacune desdites séquences A avant l'hydrogénation est une séquence monoalcénylarène monocyclique présentant un poids moléculaire moyen de 1000 à 125 000.

(b) plus de 50 % en poids de chacune desdites séquences B avant l'hydrogénation est une séquencé diène conjuguée polymérisée, présentant un poids moléculaire moyen de 10 000 à 450 000.

(c) lesdites séquences A constituant de 2 à 70% en poids dudit copolymère séquencé de base.

(d) l'insaturation éthylénique résiduelle de ladite séquencé B est inférieure à 10 % de l'insaturation éthylénique desdites séquences B avant l'hydrogénation, et

(e) l'insaturation aromatique résiduelle desdites séquences A est supérieure à 90 % de l'insaturation aromatique de ladite sequence A avant l'hydrogénation.

4. Procédé pour préparer un concentre pour addition, comportant une huile diluante et de 5 à 90 % en poids, en se basant sur le poids total du concentre, d'un copolymère séquence fonctionnalise, sélectivement hydrogéné, soluble dans l'huile, auquel on a greffe un groupe fonctionnel amide ou bien un groupe fonctionnal amine primaire ou secondaire, ledit copolymère séquencé fonctionnalise comportant :

1) un copolymère séquencé de base qui comporte :

i) de 2 à 70 % d'au moins une séquencé polymère A, plus de 50 % en poids de ladite séquence A étant une séquence alcénylarène polymérisée ; et

ii) au moins une séquencé polymère B, sélectivement hydrogénée et présentant une teneur résiduelle en insaturation éthylénique ne dépassant pas 20 %, plus de 50 % en poids de ladite séquencé B avant l'hydrogénation étant une séquencé polymérisée à diène conjugue, ledit copolymère séquence de base présentant une structure choisie dans le groupe constitue par A-B, B-A-B, $(B-A)-_nX$, et $(B-A)-_xX-(B)_z$ et $(B-A)-_xX-(A)_z$ où X est un groupe résiduel d'un agent de couplage polyfonctionnel présentant deux ou plus de deux groupes fonctionnels, y et z sont indépendamment des nombres entiers de 1 à 20 et n est un nombre entier de 2 à 40 ; et

2) dans lequel lesdits groupes fonctionnels amides ou amines sont greffes audit copolymère séquence de base sur lesdites séquences A, dans lesquelles ledit copolymère séquencé fonctionnalisé a été préparé par un procédé qui consiste à faire subir une métallation au copolymère séquencé de base, à faire réagir le copolymère séquencé de base résultant, soumis à la métallation, avec un compose électrophile choisi parmi le dioxyde de carbone, ou au moins un isocyanate de la formule générale $R_4$-N=C=O ou une imine de formule générale

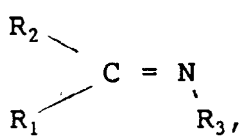

dans laquelle $R_1$, $R_2$ et $R_4$ sont des radicaux alkyle, cycloalkyle ou aryle, identiques ou différents, ou bien des radicaux combines, et $R_3$ est un radical hydrogène, alkyle, cycloalkyle, aryle ou silyle, et lorsque le compose électrophile est un isocyanate ou une imine, à mettre en contact le produit résultant avec une source de protons, ou bien, si le compose électrophile est le dioxyde de carbone, à faire réagir le copolymère séquencé de base carboxyle résultant avec une amine primaire ou secondaire afin de former un sel d'ammonium quaternaire, et à chauffer le sel d'ammonium quaternaire, afin d'obtenir le copolymère séquencé fonctionnalise.